# EUROPEAN PATENT SPECIFICATION

(11) **EP 2 953 236 B1**
(45) Date of publication and mention of the grant of the patent: **10.06.2020**
(21) Application number: 13873594.9
(22) Date of filing: 30.01.2013
(51) Int. Cl.: H02J 50/12

(54) **POWER TRANSMITTER, WIRELESS POWER TRANSFER SYSTEM, AND WIRELESS POWER TRANSFER METHOD**
LEISTUNGSSENDER, DRAHTLOSES LEISTUNGSÜBERTRAGUNGSSYSTEM UND DRAHTLOSES LEISTUNGSÜBERTRAGUNGSVERFAHREN
EMETTEUR DE PUISSANCE ET SYSTÈME ET PROCÉDÉ DE TRANSFERT DE PUISSANCE SANS FIL

(43) Date of publication of application: 09.12.2015
(73) Proprietor: FUJITSU LIMITED, Kawasaki-shi Kanagawa 211-8588 (JP)
(72) Inventor: UCHIDA, Akiyoshi, Kawasaki-shi Kanagawa 211-8588 (JP)
(74) Representative: Haseltine Lake Kempner LLP
(86) International application number: PCT/JP2013/052084
(87) International publication number: WO 2014/118919

(56) References cited:
- WO-A1-2011/077488
- JP-A- 2009 164 293
- JP-A- 2011 199 975
- JP-A- 2012 517 792
- US-A- 6 118 378
- US-B1- 6 650 213
- AKIYOSHI UCHIDA ET AL: "Phase and intensity control of multiple coil currents in resonant magnetic coupling", MICROWAVE WORKSHOP SERIES ON INNOVATIVE WIRELESS POWER TRANSMISSION: TECHNOLOGIES, SYSTEMS, AND APPLICATIONS (IMWS), 2012 IEEE MTT-S INTERNATIONAL, IEEE, 10 May 2012 (2012-05-10), pages 53-56, XP032185894, DOI: 10.1109/IMWS.2012.6215818 ISBN: 978-1-4673-1777-1

## Description

### TECHNICAL FIELD

Embodiments discussed herein relate to a power source, a wireless power transfer system and a wireless power transfer method.

### BACKGROUND ART

Recently, in order to perform power supply or perform charging, wireless power transfer techniques have been gaining attention. Research and development are being conducted regarding a wireless power transfer system wirelessly performing power transfer to various electronic apparatuses such as mobile terminals and notebook computers and household electrical appliances or to power infrastructure equipment.

In order to use wireless power transfer, it is preferable to standardize so that no problem occurs in the use of a power source of a power source and a power receiver of a power receiver that are of different manufactures.

Among conventional wireless power transfer techniques, a technique using electromagnetic induction and a technique using radio waves have generally been known.

In recent years, expectations for power transfer techniques using magnetic field resonance (magnetic resonance) or electric field resonance (electric resonance) have been increasing recently, as techniques allowing for power transfer to a plurality of power receivers and power transfer to various three-dimensional postures while maintaining some distance between power sources and the power receivers.

A variety of wireless power transfer techniques have conventionally been proposed.

### PRIOR ART DOCUMENTS

### PATENT DOCUMENT

Patent Document 1: Japanese Laid-open Patent Publication No. 2011-199975
Patent Document 2: Japanese Laid-open Patent Publication No. 2008-283789

Non-Patent Document 1: UCHIDA Akiyoshi, et al., "Phase and Intensity Control of Multiple Coil Currents in Resonant Magnetic Coupling," IMWS-IWPT2012, THU-C-1, pp.53-56, May 10-11, 2012
Non-Patent Document 2: ISHIZAKI Toshio, et al., "3-D Free-Access WPT System for Charging Movable Terminals," IMWS-IWPT2012, FRI-H-1, pp.219-222, May 10-11, 2012

### SUMMARY OF THE INVENTION

### PROBLEM TO BE SOLVED BY THE INVENTION

As described above, attention has conventionally been paid to wireless power transfer techniques for wirelessly transferring power for the purposes of power supply or charging. Nevertheless, when performing the power transfer by using a plurality of power supply coils (power sources) which are mutually affecting, one power supply coil may be a load of another power supply coil, so that the power transfer may not performed in an optimum state.

It is not only a problem limited to the power transfer using the magnetic field resonance or electric field resonance, but also a problem, for example, when performing the power transfer by using magnetic field induction or electric field induction.

Note that, the embodiments may be applied to a power source including at least two power supply coils, wherein an output of each power supply coils is independently controlled and is mutually influenced each other.

Further, the embodiments may be also applied to a wireless power transfer system including at least two power sources, wherein an output power of each of the power sources is independently controlled and is mutually influenced each other.

### MEANS FOR SOLVING THE PROBLEM

According to one embodiment, there is provided a power source as defined in claim 1. Preferred features are defined in the dependent claims. A wireless power transfer system comprising the features of claim 7, a method comprising the features of claim 14 and a program comprising the features of claim 17 are provided also.

### EFFECT OF THE INVENTION

The power source, the wireless power transfer system and the wireless power transfer method disclosed have an advantageous effect in that power transfer may be performed in an optimum state.

### BRIEF DESCRIPTION OF DRAWINGS

[FIG. 1] FIG. 1 is a block diagram schematically depicting one example of a wireless power transfer system.
[FIG. 2A] FIG. 2A is a diagram (1) for illustrating a modified example of a transmission coil in the wireless power transfer system of FIG. 1.
[FIG. 2B] FIG. 2B is a diagram (2) for illustrating a modified example of the transmission coil in the wireless power transfer system of FIG. 1.
[FIG. 2C] FIG. 2C is a diagram (3) for illustrating a modified example of the transmission coil in the wireless power transfer system of FIG. 1.
[FIG. 3A] FIG. 3A is a circuit diagram (1) depicting an example of an independent resonance coil.
[FIG. 3B] FIG. 3B is a circuit diagram (2) depicting an example of the independent resonance coil.
[FIG. 3C] FIG. 3C is a circuit diagram (3) depicting an example of the independent resonance coil.
[FIG. 3D] FIG. 3D is a circuit diagram (4) depicting an example of the independent resonance coil.
[FIG. 4A] FIG. 4A is a circuit diagram (1) depicting an example of a resonance coil connected to a load or a power supply.
[FIG. 4B] FIG. 4B is a circuit diagram (2) depicting an example of the resonance coil connected to the load or the power supply.
[FIG. 4C] FIG. 4C is a circuit diagram (3) depicting an example of the resonance coil connected to the load or the power supply.
[FIG. 4D] FIG. DA is a circuit diagram (4) depicting an example of the resonance coil connected to the load or the power supply.
[FIG. 5A] FIG. 5A is a diagram (1) for illustrating an example of controlling magnetic field by a plurality of power sources.
[FIG. 5B] FIG. 5B is a diagram (2) for illustrating an example of controlling magnetic field by the plurality of power sources.
[FIG. 5C] FIG. 5C is a diagram (3) for illustrating an example of controlling magnetic field by the plurality of power sources.
[FIG. 6] FIG. 6 is a diagram for illustrating an example of a correspondence between a plurality of power sources and a plurality of power receivers according to a related art.
[FIG. 7] FIG. 7 is a diagram for illustrating a state of each power receiver in FIG. 6.
[FIG. 8A] FIG. 8A is a diagram (1) for illustrating correspondence between the plurality of power sources and the plurality of power receivers.
[FIG. 8B] FIG. 8B is a diagram (2) for illustrating correspondence between the plurality of power sources and the plurality of power receivers.
[FIG. 8C] FIG. 8C is a diagram (3) for illustrating correspondence between the plurality of power sources and the plurality of power receivers.
[FIG. 9] FIG. 9 is a diagram (4) for illustrating correspondence between the plurality of power sources and the plurality of power receivers.
[FIG. 10] FIG. 10 is a diagram for illustrating a power transfer plan design in a singular power source.
[FIG. 11] FIG. 11 is a diagram for illustrating a power transfer plan design in a plurality of power sources.
[FIG. 12] FIG. 12 is a diagram for illustrating an example of a wireless power transfer system with the plurality of power sources.
[FIG. 13A] FIG. 13A is a diagram for illustrating a posture dependency of a power transfer efficiency in the case of applying a constant voltage power supply in the wireless power transfer system depicted in FIG. 12.
[FIG. 13B] FIG. 13B is a diagram for illustrating a posture dependency of a power transfer efficiency in the case of applying a constant current power supply in the wireless power transfer system depicted in FIG. 12.
[FIG. 14] FIG. 14 is a diagram for illustrating another example of a wireless power transfer system with the plurality of power sources.
[FIG. 15A] FIG. 15A is a diagram for illustrating a posture dependency of a power transfer efficiency in the case of applying a constant voltage power supply in the wireless power transfer system depicted in FIG. 14.
[FIG. 15B] FIG. 15B is a diagram for illustrating the posture dependency of a power transfer efficiency in the case of applying a constant current power supply in the wireless power transfer system depicted in FIG. 14.
[FIG. 16] FIG. 16 is a block diagram for illustrating an example of a wireless power transfer system of the present embodiment.
[FIG. 17] FIG. 17 is a flowchart (1) illustrating an example of a process in the wireless power transfer system depicted in FIG. 16.
[FIG. 18] FIG. 18 is a flowchart (2) illustrating an example of a process in the wireless power transfer system depicted in FIG. 16.
[FIG. 19] FIG. 19 is a diagram for illustrating an example of the transmission information between the power sources.
[FIG. 20] FIG. 20 is a diagram for illustrating an example of the transmission information between the power source and the power receiver.
[FIG. 21] FIG. 21 is a diagram for illustrating an optimization process of parameters in the case of applying a constant voltage power supply in the wireless power transfer system depicted in FIG. 12.
[FIG. 22] FIG. 22 is a diagram for illustrating optimization process of parameters in the case of applying a constant current power supply in the wireless power transfer system depicted in FIG. 12.
[FIG. 23] FIG. 23 is a flowchart illustrating an example of the optimization processes of parameters depicted in FIG. 21 and FIG. 22.
[FIG. 24] FIG. 24 is a block diagram for illustrating an example of a constant current power supply.
[FIG. 25] FIG. 25 is a block diagram for illustrating an example of the power source in the wireless power transfer system depicted in FIG. 16.

### MODES FOR CARRYING OUT THE INVENTION

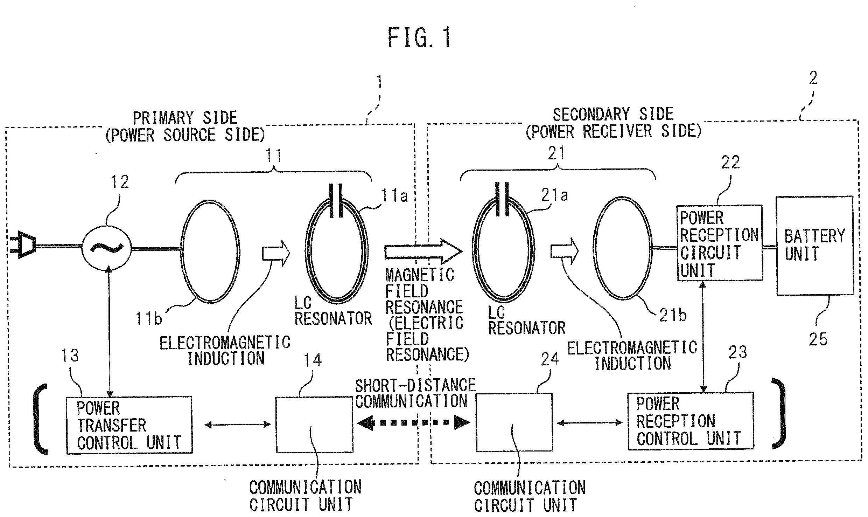

First, before describing embodiments of a power source, a wireless power transfer system and a wireless power transfer method, an example of a wireless power transfer system and a wireless power transfer system including a plurality of power sources and a plurality of power receivers according to a related art will be described, with reference to FIG. 1 to FIG. 9.

FIG. 1 is a block diagram schematically depicting one example of a wireless power transfer system. In FIG. 1, reference sign 1 denotes a primary side (a power source side: a power source), and reference sign 2 denotes a secondary side (a power receiver side: a power receiver).

As depicted in FIG. 1, power source 1 includes a wireless power transfer unit 11, a high frequency power supply unit 12, a power transfer control unit 13, and a communication circuit unit (a first communication circuit unit) 14. In addition, power receiver 2 includes a wireless power reception unit 21, a power reception circuit unit 22, a power reception control unit 23, and a communication circuit unit (a second communication circuit unit) 24.

The wireless power transfer unit 11 includes a first coil (a power supply coil) 11b and a second coil (a power source resonance coil) 11a, and the wireless power reception unit 21 includes a third coil (a power receiver resonance coil) 21a and a fourth coil (a power extraction coil) 21b.

As depicted in FIG. 1, the power source 1 and the power receiver 2 perform energy (electric power) transmission from the power source 1 to the power receiver 2 by magnetic field resonance (electric field resonance) between the power source resonance coil 11a and the power receiver resonance coil 21a. Power transfer from the power source resonance coil 11a to the c may be performed not only by magnetic field resonance but also electric field resonance or the like. However, the following description will be given mainly by way of example of magnetic field resonance.

The power source 1 and the power receiver 2 communicate with each other (near field communication) by the communication circuit unit 14 and the communication circuit unit 24. Note that, a distance of power transfer (a power transfer range PR) by the power source resonance coil 11a of power source 1 and the power receiver resonance coil 21a of power receiver 2 is set to be shorter than a distance of communication (a communication range CR) by the communication circuit unit 14 of power source 1 and the communication circuit unit 24 of power receiver 2 (PR < CR).

In addition, power transfer by the power source resonance coil 11a and the power receiver resonance coil 21a is performed by a system (an out-band communication) independent from communication by the communication circuit units 14 and 24. Specifically, power transfer by the resonance coils 11a and 21a uses, for example, a frequency band of 6.78 MHz, whereas communication by the communication circuit units 14 and 24 uses, for example, a frequency band of 2.4 GHz.

The communication by the communication circuit units 14 and 24 may use, for example, a DSSS wireless LAN system based on IEEE 802.11b or Bluetooth (registered trademark).

The above described wireless power transfer system performs power transfer using magnetic field resonance or electric field resonance by the power source resonance coil 11a of the power source 1 and the power receiver resonance coil 21a of the power receiver 2, for example, in a near field at a distance of about a wavelength of a frequency used. Accordingly, the range of power transfer (a power transfer area) PR varies with the frequency used for power transfer.

The high frequency power supply unit 12 supplies power to the power supply coil (the first coil) 11b, and the power supply coil 11b supplies power to the power source resonance coil 11a arranged very close to the power supply coil 11b by using electromagnetic induction. The power source resonance coil 11a transfers power to the power receiver resonance coil 21a (the power receiver 2) at a resonance frequency that causes magnetic field resonance between the resonance coils 11a and 21a.

The power receiver resonance coil 21a supplies power to the power extraction coil (the fourth coil) 21b arranged very close to the power receiver resonance coil 21a, by using electromagnetic induction. The power extraction coil 21b is connected to the power reception circuit unit 22 to extract a predetermined amount of power. The power extracted from the power reception circuit unit 22 is used, for example, for charging a battery in the battery unit (load) 25, as a power supply output to the circuits of power receiver 2, or the like.

Note that, the high frequency power supply unit 12 of power source 1 is controlled by the power transfer control unit 13, and the power reception circuit unit 22 of power receiver 2 is controlled by the power reception control unit 23. Then, the power transfer control unit 13 and the power reception control unit 23 are connected via the communication circuit units 14 and 24, and adapted to perform various controls so that power transfer from power source 1 to power receiver 2 may be performed in an optimum state.

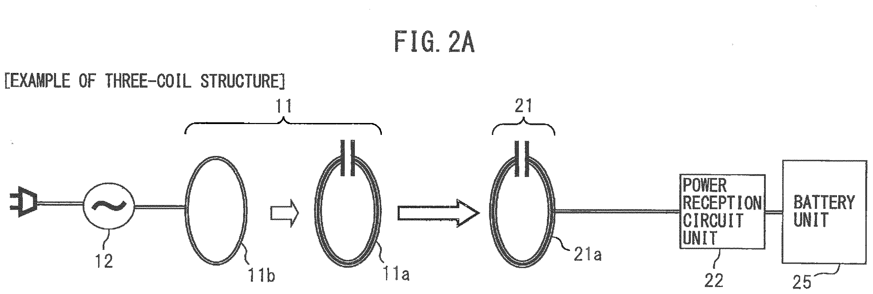

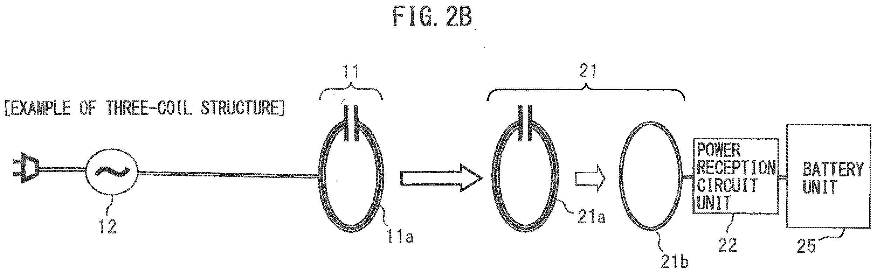

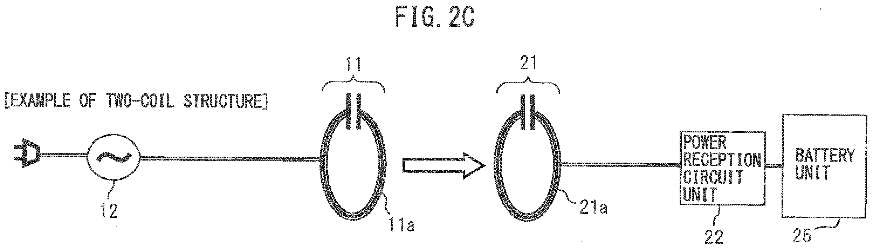

FIG. 2A to FIG. 2C are diagrams for illustrating modified examples of a transmission coil in the wireless power transfer system of FIG. 1. Note that, FIG. 2A and FIG. 2B depict exemplary three-coil structures, and FIG. 2C depicts an exemplary two-coil structure.

Specifically, in the wireless power transfer system depicted in FIG. 1, the wireless power transfer unit 11 includes the first coil 11b and the second coil 11a, and the wireless power reception unit 21 includes the third coil 21a and the fourth coil.

On the other hand, in the example of FIG. 2A, the wireless power reception unit 21 is set as a single coil (a power receiver resonance coil: an LC resonator) 21a, and in the example of FIG. 2B, the wireless power transfer unit 11 is set as a single coil (a power source resonance coil: an LC resonator) 11a.

Further, in the example of FIG. 2C, the wireless power reception unit 21 is set as a single power receiver resonance coil 21a and the wireless power transfer unit 11 is set as a single power source resonance coil 11a. Note that, FIG. 2A to FIG. 2C are merely examples and, obviously, various modifications may be made.

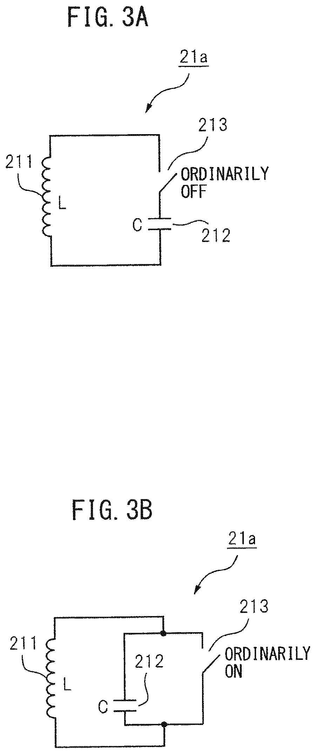

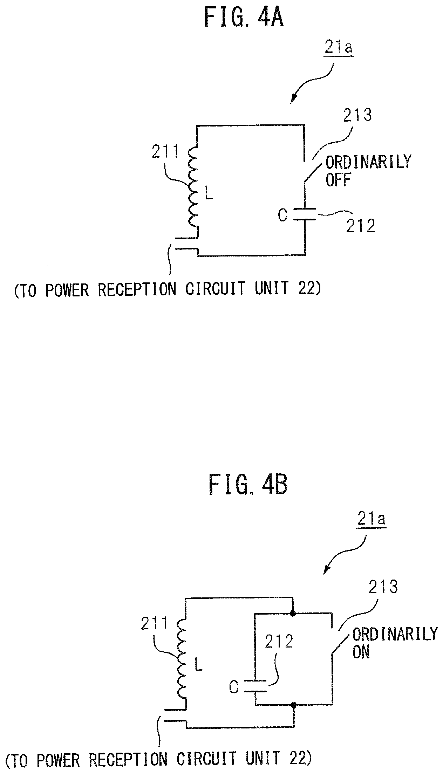

FIG. 3A to FIG. 3D are circuit diagrams depicting examples of an independent resonance coil (the power receiver resonance coil 21a), and FIG. 4A to FIG. 4D are circuit diagrams depicting examples of a resonance coil (the power receiver resonance coil 21a) connected to a load or a power supply.

Note that, FIG. 3A to FIG. 3D correspond to the power receiver resonance coil 21a of FIG. 1 and FIG. 2B, and FIG. 4A to FIG. 4D correspond to the power receiver resonance coil 21a of FIG. 2A and FIG. 2C.

In the examples depicted in FIG. 3A and FIG. 4A, the power receiver resonance coil 21a includes a coil (L) 211, a capacitor (C) 212, and a switch 213 connected in series, in which the switch 213 is ordinarily in an off-state. In the examples depicted in FIG. 3B and FIG. 4B, the power receiver resonance coil 21a includes the coil (L) 211 and the capacitor (C) 212 connected in series, and the switch 213 connected in parallel to the capacitor 212, in which the switch 213 is ordinarily in an on-state.

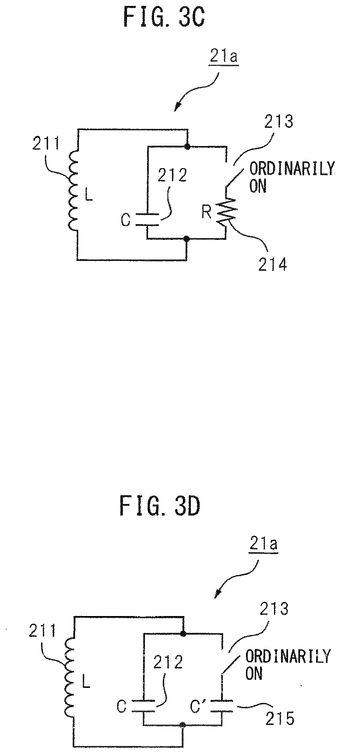

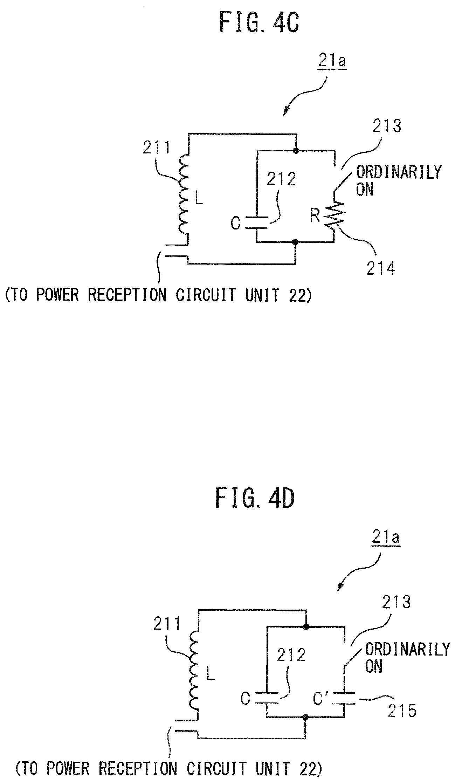

In the examples depicted in FIG. 3C and FIG. 4C, the power receiver resonance coil 21a of FIG. 3B and FIG. 4B includes the switch 213 and the resistance (R) 214 connected in series and arranged in parallel to the capacitor 212, in which the switch 213 is ordinarily in the on-state.

The examples of FIG. 3D and FIG. 4D depict the power receiver resonance coil 21a of FIG. 3B and FIG. 4B, in which the switch 213 and another capacitor (C') 215 connected in series are arranged in parallel to the capacitor 212, and the switch 213 is ordinarily in the on-state.

In each of the power receiver resonance coils 21a described above, the switch 213 is set to "off" or "on" so that the power receiver resonance coil 21a does not operate ordinarily. The reason for this is, for example, to prevent heat generation or the like caused by power transfer to a power receiver 2 not in use (on power receiver) or to a power receiver 2 out of order.

In the above structure, the power source resonance coil 11a of power source 1 may also be set as in FIG. 3A to FIG. 3D and FIG. 4A to FIG. 4D. However, the power source resonance coil 11a of the power source 1 may be set so as to operate ordinarily and may be controlled to be turned on/off by an output of the high frequency power supply unit 12. In this case, in the power source resonance coil 11a, the switch 213 is to be shortcircuited in FIG. 3A and FIG. 4A.

In this manner, when a plurality of power receivers 2 are present, selecting only the power receiver resonance coil 21a of a predetermined power receiver 2 for receiving power transmitted from the power source 1 and making the power receiver resonance coil 21a operable enables power to be transferred to the selected power receiver 2.

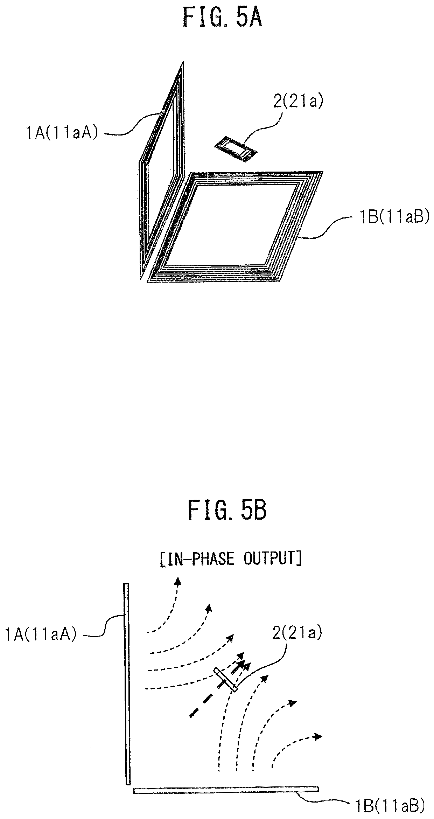

FIG. 5A to FIG. 5C are diagrams for illustrating examples of controlling magnetic field by a plurality of power sources. In FIG. 5A to FIG. 5C, reference signs 1A and 1B denote power sources, and reference sign 2 denotes a power receiver.

As depicted in FIG. 5A, an power source resonance coil 11aA for power transfer used for magnetic field resonance of the power source 1A and an power source resonance coil 11aB for power transfer used for magnetic field resonance of the power source 1B are arranged, for example, so as to be orthogonal to each other.

Further, the power receiver resonance coil 21a used for magnetic field resonance of the power receiver 2 is arranged at a different angle (an angle not parallel) at a position surrounded by the power source resonance coil 11aA and the power source resonance coil 11aB.

Note that, the power source resonance coil (LC resonator) 11aA and 11aB for power transfer may also be provided in a single power source. In other words, a single power source 1 may include a plurality of wireless power transfer units 11.

Although details will be given later, designating one of the plurality of power sources as a master and the other one or more power sources as slaves means that a CPU (Central Processing Unit) of the single master power source controls all of the resonance coils included in the master power source and the slave power sources.

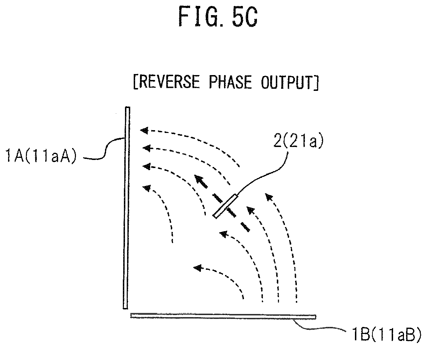

FIG. 5B depicts a situation in which the power source resonance coils 11aA and 11aB output an in-phase magnetic field, and FIG. 5C depicts a situation in which the power source resonance coils 11aA and 11aB output a reverse phase magnetic field.

For example, by comparing the cases where the power source resonance coils 11aA and 11aB output an in-phase magnetic field and a reverse phase magnetic field, a synthesized magnetic field becomes a 90° rotation relationship in each other, so that a power transfer is carried out to each power receiver 2 (power receiver resonance coil 21a) with suitably transmitting from the power source resonance coils 11aA and 11aB based on the postures of the power receiver 2.

As described above, when power is transferred to the power receiver 2 positioned at an arbitrary position and an arbitrary posture (angle) by the plurality of power sources 1A and 1B, magnetic fields occurring in the resonance coils 11aA and 11aB of the power sources 1A and 1B change variously.

In other words, the wireless power transfer system of the present embodiment includes a plurality of power sources and at least one power receiver and adjusts outputs (strengths and phases) between the plurality of power sources according to positions (X, Y and Z) and postures (*θ*x, *θ*y and *θ*z) of the power receiver.

In addition, it will be seen that, with respect to three-dimensional space, for example, using three or more power sources in the actual three-dimensional space, by adjusting the respective output phase differences and the output intensity ratios, so that the synthesized magnetic field may be controlled to any direction in the three-dimensional space.

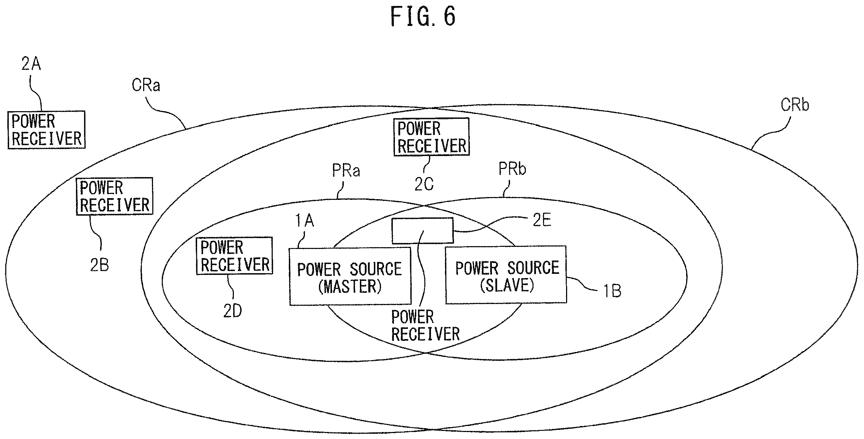

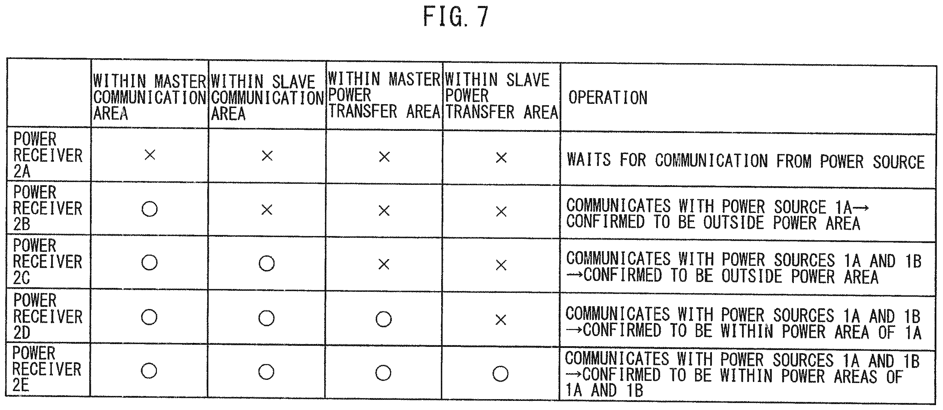

FIG. 6 is a diagram for illustrating an example of a correspondence between a plurality of power sources and a plurality of power receivers according to a related art, and FIG. 7 is a diagram for illustrating a state of each power receiver in FIG. 6. Note that FIG. 6 and FIG. 7 illustrate the case where two power sources 1A and 1B and five power receivers 2A to 2E are arranged.

In the wireless power transfer system depicted in FIG. 6, the single power source 1A of the plurality of power sources 1A and 1B is designated as a master (primary) and the other power source 1B is designated as a slave (secondary). For example, the master (the power source 1A) determines processing such as optimization of the plurality of power sources and the power receiver.

In FIG. 6, reference sign PRa denotes a power transfer area of the power source 1A (a master power transfer area); reference sign PRb denotes a power transfer area of the power source 1B (a slave power transfer area); reference sign CRa denotes a communication area of the power source 1A (a master communication area); and reference sign CRb denotes a communication area of the power source 1B (a slave communication area).

Accordingly, statuses of the power receivers 2A to 2E are as follows. Specifically, as depicted in FIG. 7, the power receiver 2A is outside the master communication area CRa (×), outside the slave communication area Crb, outside the master power transfer area PRa, and outside the slave power transfer area PRb, and simply waits for communication from the power sources.

Next, the power receiver 2B is located within the master communication area CRa (o), outside the slave communication area CRb, outside the master power transfer area PRa, and outside the slave power transfer area PRb. Thus, communicating with the master power source 1A allows for a confirmation that the power receiver 2B is outside the power areas (outside the master and slave power transfer areas).

In addition, the power receiver 2C is within the master communication area CRa, within the slave communication area CRb, outside the master power transfer area PRa, and outside the slave power transfer area PRb. Thus, communicating with the master and slave power sources 1A and 1B allows for a confirmation that the power receiver 2C is outside the power areas.

In addition, the power receiver 2D is within the master communication area CRa, within the slave communication area CRb, within the master power transfer area PRa, and outside the slave power transfer area PRb. Thus, communicating with the master and slave power sources 1A and 1B allows for a confirmation that the power receiver 2D is within the power area of the power source 1A (within the master power transfer area PRa).

Additionally, the power receiver 2E is within the master communication area CRa, within the slave communication area CRb, within the master power transfer area PRa, and within the slave power transfer area PRb. Thus, communicating with the master and slave power sources 1A and 1B allows for a confirmation that the power receiver 2E is within the power areas of the power sources 1A and 1B (within the power transfer areas PRa and PRb).

Of the plurality of power sources, a single power source is determined as a master. The master may be determined, for example, depending on a condition in which a largest number of power receivers are located within the communication area of the power source or within the power transfer area thereof, as described later.

For example, when there is an equal condition in which each one power receiver is located within the communication areas of the power sources, the master may be determined by adding an additional condition such as a communication strength between the power source and the power receiver, or an arbitrary one power source may be determined as a master using a random number table or the like.

When the power sources are of different manufacturers, optimization rules for strengths and phases of the power sources differ from each other. Thus, in the wireless power transfer system of the embodiment, designating one of the plurality of power sources as a master allows the master power source to control optimization for the power sources including the other one or more slave power sources.

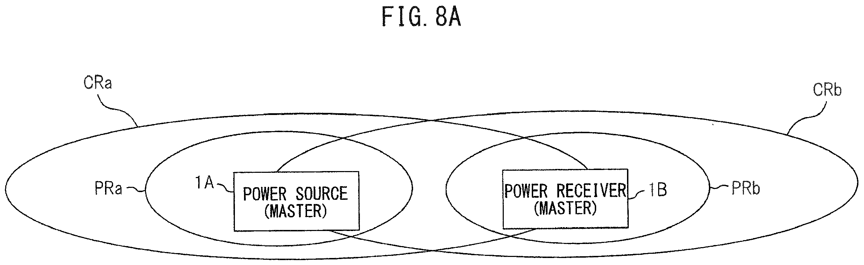

FIG. 8A to FIG. 8C are diagrams for illustrating correspondence between the plurality of power sources and the plurality of power receivers, and illustrating how to determine a master and slaves in the plurality of power sources.

First, a master power source and slave power sources are determined in the plurality of power sources when the power sources are located within communication ranges (communication areas) of each other, power transfer ranges (power transfer areas) of the power sources overlap each other, and the relevant power receiver detects the overlapping of the power transfer areas.

Specifically, FIG. 8A depicts a situation in which the communication area CRa of the power source 1A overlaps the communication area CRb of the power source 1B, whereas the power transfer area PRa of the power source 1A does not overlap the power transfer area PRb of the power source 1B. In this situation, since the power transfer areas PRa and PRb do not overlap each other, both the power sources 1A and 1B are designated as respective master power sources.

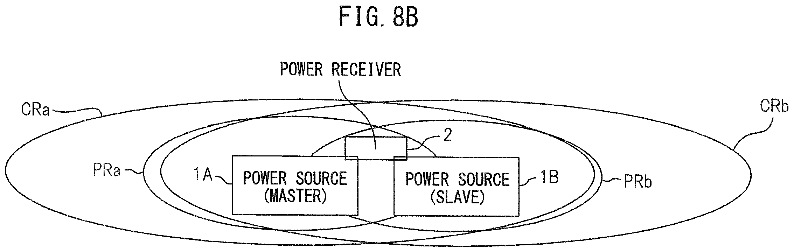

Next, FIG. 8B depicts a situation in which the communication area CRa and the power transfer area PRa of the power source 1A overlap the communication area CRb and the power transfer area PRb of the power source 1B and the power receiver 2 is included in both the power transfer areas PRa and PRb.

In the situation of FIG. 8B, the power sources 1A and 1B are located within the communication areas CRa and CRb of each other, the power transfer areas PRa and PRb overlap each other, and moreover, the power receiver 2 detects the overlapping of the power transfer areas PRa and PRb.

Accordingly, in FIG. 8B, one (1A) of the power sources 1A and 1B is designated as a master power source and the other one (1B) thereof is designated as a slave power source. In this case, although the power source 1B may be designated as a master and the power source 1A may be designated as a slave, either one of the power sources 1A and 1B is designated as a master power source.

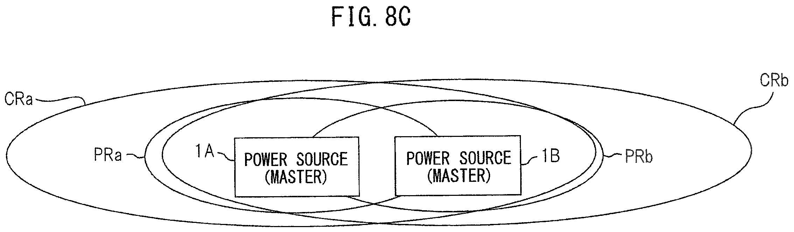

In addition, FIG. 8C depicts a situation in which the power sources 1A and 1B are arranged in the same positional relationship as that in FIG. 8B described above, but the power receiver 2 is not present (not located within the communication areas CRa and CRb). In this situation, both the power sources 1A and 1B are designated as masters.

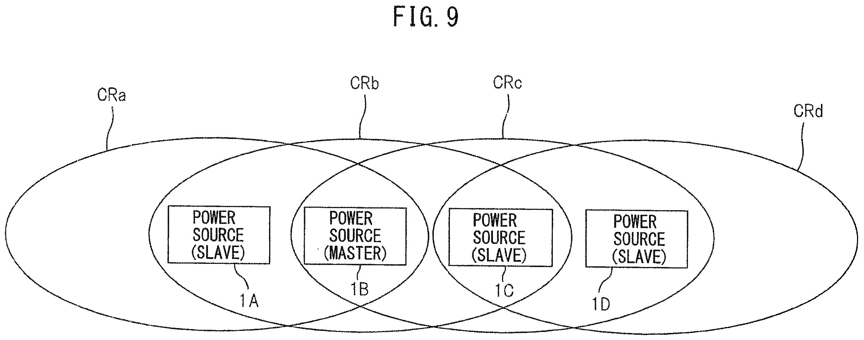

Similarly, when three or more power sources are arranged, for example, in the positional relationship corresponding to FIG. 8B, any one of the power sources is designated as a master power source. Various methods may be considered to designate a single master power source from the plurality of power sources. One example of the methods will be described with reference to FIG. 9.

FIG. 9 is a diagram (4) for illustrating correspondence between the and a plurality of power sources and the plurality of power receivers, in which four power sources 1A to 1D are arranged in a line. A communication area CRa of the power source 1A includes the power source 1B but does not include the power sources 1C and 1D. Similarly, a communication area CRd of the power source 1D includes the power source 1C but does not include the power sources 1A and 1B.

In addition, a communication area CRb of the power source 1B includes the power sources 1A and 1C but does not include the power source 1D. Similarly, a communication area CRc of the power source 1C includes the power sources 1B and 1D but does not include the power source 1A.

In the situation of FIG. 9, for example, the power source 1B is designated as a mater (a master power source) and the other power sources 1A, 1C and 1D are designated as slaves (slave power sources). Alternatively, the power source 1C may be designated as a master.

Meanwhile, designating the power source 1B as a master power source makes it difficult to directly communicate with the power source 1D. In this case, the power source 1B communicates with the power source 1D via the power source 1C to control optimization, and the like. Therefore, it is preferable to designate, as a master, a power source that may directly communicate with a largest number of power sources when designating a single master from a plurality of power sources.

Further, in FIG. 9, the four power sources 1A to 1D are arranged in a straight line. However, practically, a plurality of power sources will be disposed in various positional relationships, for example, by being embedded in a wall or a ceiling of a room, being built in a desk or a table, or being mounted on a floor, a table, or the like.

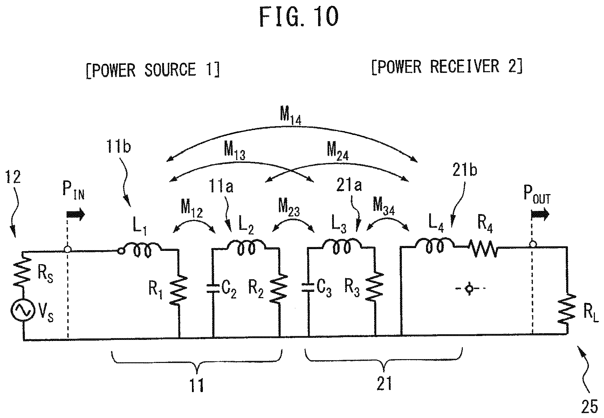

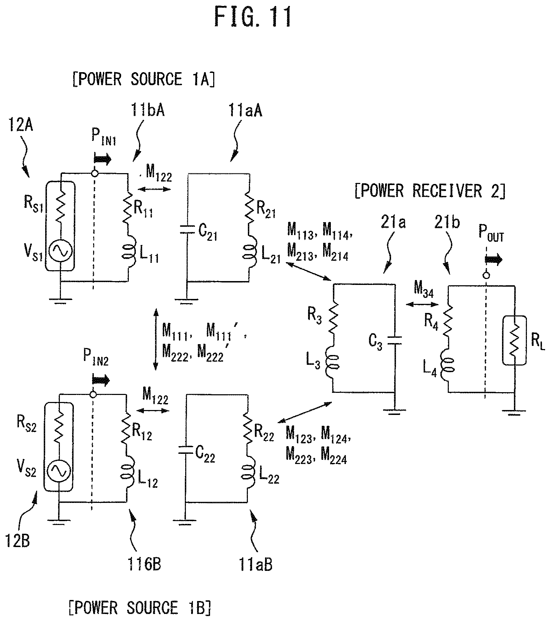

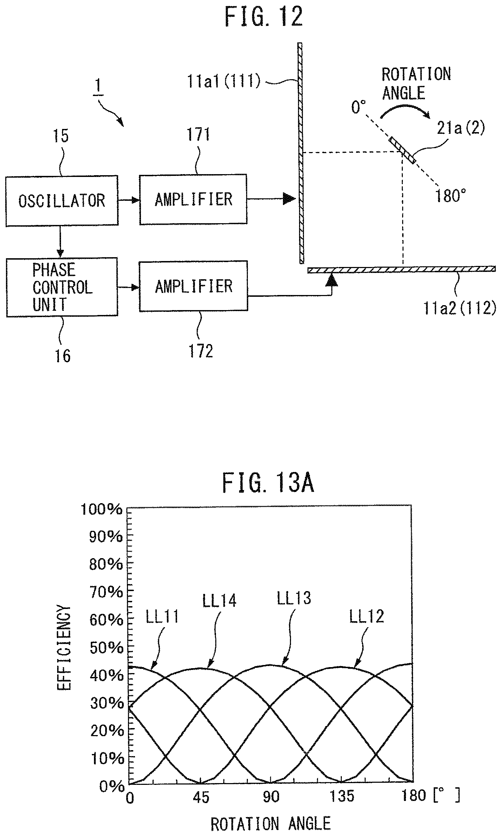

Below, embodiments of a power source, a wireless power transfer system and a wireless power transfer method will be explained in detail with reference to the attached drawings. First, power transfer plan designs used for single power source and a plurality of power sources will be explained with reference to FIG. 10 and FIG. 11, and then, a posture dependency of a power transfer efficiency in an example of a wireless power transfer system including a plurality of power sources will be explained with reference to FIG. 12 to FIG. 15B.

FIG. 10 is a diagram for illustrating a power transfer plan design in a singular power source. Specifically, FIG. 10 illustrates an equivalent circuit model including one power source 1 and one power receiver 2, for example, so as to explain the case of performing power transfer from the power source 1 to the power receiver 2, as depicted in above described FIG. 1.

In the equivalent circuit model depicted in FIG. 10, references V_{S} and R_{S} correspond to a high-frequency power supply unit 12; L₁ and R₁ correspond to a power supply coil (first coil) 11b; and C₂, L₂ and R₂ correspond to a power source resonance coil (second coil: LC resonator) 11a.

Further, references C₃, L₃ and R₃ correspond to a power receiver resonance coil (third coil: LC resonator) 21a; L₄ and R₄ correspond to a power extraction coil (fourth coil) 21b; and R_{L} corresponds to a load (battery unit) 25.

Note that, in the equivalent circuit model depicted in FIG. 10, the capacitance values C₂ and C₃, and resistance values R_{L} and R_{S} are already known, and resistance values R₁ to R₄, inductance values L₁ to L₄, and mutual inductance values M₁₂, M₁₃, M₁₄, M₂₃, M₂₄ and M₃₄ may be calculated from electromagnetic field simulations.

Therefore, by setting the above values as fixed parameters to a circuit simulator based on the equivalent circuit model and performing operations in the circuit simulator, a power transfer efficiency of the single power source depicted in FIG. 1 may be obtained.

Specifically, a transmission power P_{IN} may be calculated from a formula [reception power P_{OUT}] / [power transmitting and receiving efficiency (P_{OUT}/P_{IN})]. Therefore, a proper reception power P_{OUT} may be applied to the load R_{L} by inputting the calculated transmission power P_{IN} into the power supply coil 11b. Note that, in this specification, the power transmitting and receiving efficiency is also referred to as power transfer efficiency.

FIG. 11 is a diagram for illustrating a power transfer plan design in a plurality of power sources. Specifically, FIG. 11 illustrates an equivalent circuit model including two power sources 1A and 1B, and one power receiver 2, for example, so as to explain the case of performing power transfer from the power sources 1A and 1B to the power receiver 2, as depicted in above described FIG. 5A.

In the equivalent circuit model depicted in FIG. 11, references V_{S1} and R_{S1} correspond to a high-frequency power supply unit 12A of the power source 1A; V_{S2} and R_{S2} correspond to a high frequency power supply unit 12B of the power source 1B. Further, L₁₁ and R₁₁ correspond to a power supply coil 11bA of the power source 1A; and L₁₂ and R₁₂ correspond to a power supply coil 11bB of the power source 1B.

In addition, references C₂₁, L₂₁ and R₂₁ correspond to a power source resonance coil 11aA of the power source 1A; and C₂₂, L₂₂ and R₂₂ correspond to a power source resonance coil 11aB of the power source 1B. Note that, the power receiver 2 is similar to that depicted in FIG. 10, and references C₃, L₃ and R₃ correspond to the power receiver resonance coil 21a; L₄ and R₄ correspond to the power extraction coil 21b; and R_{L} corresponds to the load 25.

In the equivalent circuit model depicted in FIG. 11, the capacitance values C₂₁, C₂₂ and C₃, and the resistance values R_{L}, R_{S1} and R_{S3} are already known, and the resistance values R₁₁, R₁₂, R₂₁, R₂₂, R₃ and R₄, and the inductance values L₁₁, L₁₂, L₂₁, L₂₂, L₃ and L₄ may be calculated from electromagnetic field simulations. In addition, mutual inductance values M₁₁₂, M₁₂₂, M₁₁₃, M₁₁₄, M₂₁₃, M₂₁₄, M₁₂₃, M₁₂₄, M₂₂₃, M₂₂₄, M₁₁₁, M₁₁₁', M₂₂₂, M₂₂₂' and M₃₄ may be also calculated from the electromagnetic field simulations.

Therefore, the above values are set to a circuit simulator of the equivalent circuit model as fixed parameters, and an operation is performed by using V_{S1} and V_{S2} as variable parameters, power supply transmission efficiencies of a plurality power sources depicted in FIG. 5A may be obtained. Note that, set values of V_{S1} and V_{S2} include a phase difference between V_{S1} and V_{S2} and an intensity ratio between V_{S1} and V_{S2}.

In the equivalent circuit model depicted in FIG. 11, R_{S1} included in the power source 1A is considered as a load which is the same as the power receiver from the power source 1B, and similarly, R_{S2} included in the power source 1B is considered as a load which is the same as the power receiver from the power source 1A. Therefore, the impedances R_{S1} and R_{S2} of the high frequency power supply units 12A and 12B affect the power transfer efficiency of the wireless power transfer system depicted in FIG. 11.

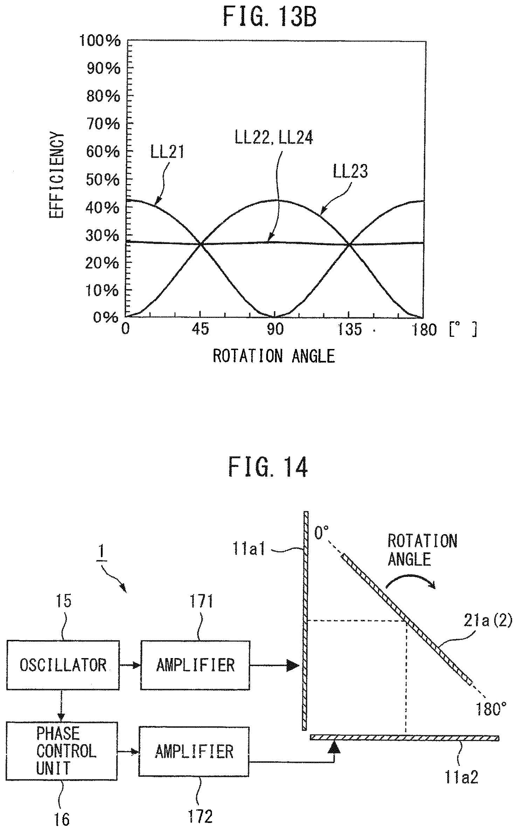

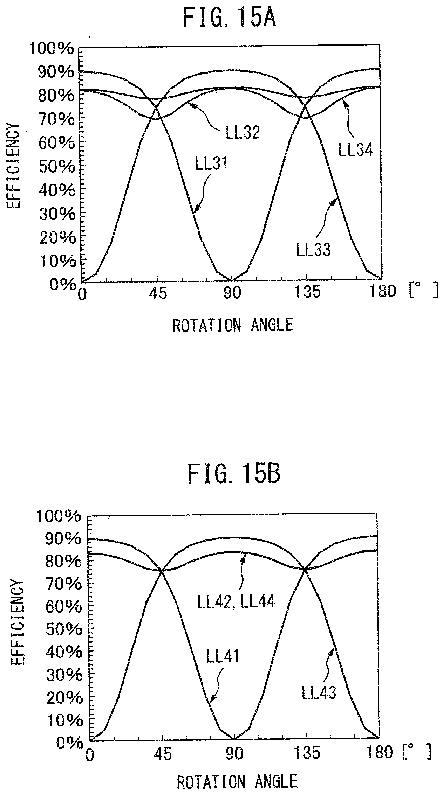

Next, the case will be explained with reference to FIG. 12, FIG. 13A and FIG. 13B, as well as, FIG. 14, FIG. 15A and FIG. 15B, where posture dependencies of power supply transmission efficiencies are varied in accordance with power supply impedances of a plurality of power sources in the wireless power transfer using the plurality of power sources.

FIG. 12 is a diagram for illustrating an example of a wireless power transfer system with the plurality of power sources. In FIG. 12, references 11a1 and 11a2 denote power source 1 of the power source resonance coil (second coil: LC resonator), 15 denotes an oscillator, 16 denotes a phase control unit, 171 and 172 denote amplifiers, and 21a denotes a power receiver resonance coil (LC resonator: third coil) of the power receiver 2.

Note that, FIG. 12 illustrates the case where the power source 1 includes two power source resonance coils 11a1 and 11a2 capable of controlling a phase and an intensity, performs power transfer to the power receiver 2 via the power receiver resonance coil 21a. In FIG 12, a size of the power receiver resonance coil 21a of the power receiver 2 is assumed sufficiently smaller than that of the power source resonance coils 11a1 and 11a2. Further, the power source resonance coil 11a1 corresponds to a first power supply coil, and the power source resonance coil 11a2 corresponds to a second power supply coil.

As depicted in FIG. 12, an oscillation signal generated by the oscillator 15 is input to the amplifier 171, and to the amplifier 172 via the phase control unit 16. The phase control unit 16 adjusts a phase difference between output phases of the amplifiers 171 and 172, by controlling a phase of the signal input to the amplifier 172.

The amplifiers 171 and 172 amplify and output the input oscillation signals, respectively, an output of the amplifier 171 is input to the power source resonance coil 11a1 (wireless power transfer unit 111), and an output of the amplifier 172 is input to the power source resonance coil 11a2 (wireless power transfer unit 112).

Note that, the phase difference between the amplifiers 171 and 172 is adjusted by controlling a phase of the oscillation signal performed by the phase control unit 16, and the intensity ratio between the amplifiers 171 and 172 is adjusted by controlling intensities of the amplification factors of the amplifiers 171 and 172.

The phase control performed by using the phase control unit 16, and the control of the amplification factors performed by using the amplifiers 171 and 172 may be carried out in accordance with the power transfer control unit 13 depicted in FIG. 1.

The amplifiers (high frequency power supply units) 171 and 172 in FIG. 12 include an AC impedance characteristics, and the impedance characteristics (impedances R_{S1} and R_{S2} depicted in FIG. 11) of the high frequency power supply units may affect the power transfer efficiency.

In FIG 12, although two power source resonance coils 11a1 and 11a2 of the power source 1 are arranged in orthogonal, the power source resonance coils 11a1 and 11a2 may be included in different power sources 1A and 1B as depicted in FIG. 5A.

In this case, each of the power sources 1A and 1B includes an oscillator, and the phase difference between the output signals may be adjusted by exchanging the phase information via the respective communication units of the power sources 1A and 1B. Further, regarding the adjustments of the intensity ratios of the power sources 1A and 1B, similar features may be applied.

Further, in the case of determining the power source resonance coils 11a1 and 11a2 to that of different power sources 1A and 1B, the phase control (control of the phase difference) may be performed by using the communication between the power sources 1A and 1B.

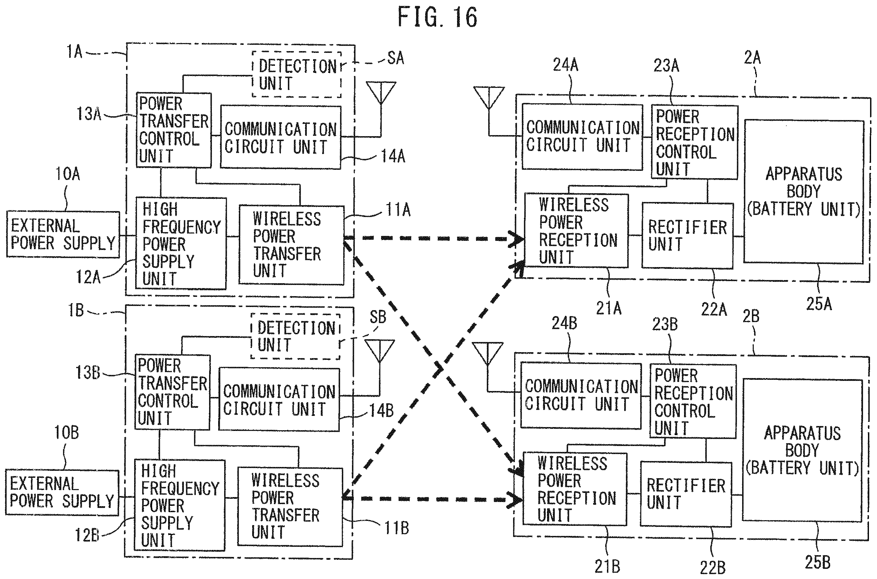

Specifically, the control of the phase difference and the intensity ratio of the output signals of two power sources 1A and 1B may be performed in accordance with a power transfer control unit 13 of a master power source 1A via communication circuit units 14A and 14B, which will be explained later in detail with reference to FIG. 16.

FIG. 13A is a diagram for illustrating a posture dependency of a power transfer efficiency in the case of applying a constant voltage power supply in a wireless power transfer system depicted in FIG. 12. Further, FIG. 13B is a diagram for illustrating a posture dependency of a power transfer efficiency in the case of applying a constant current power supply in a wireless power transfer system depicted in FIG. 12.

For example, the constant voltage power supply outputs a signal of 6.78 MHz to be used for performing power transfer, and an output impedance of the constant voltage power supply is matched to a range from several Ω to several tens of Ω (as one example, 50Ω). Note that, various kind of high frequency power supply units each including an output impedance of 50Ω, which may be applied to the present embodiments, have been proposed and widely used in the technical art of communications.

Further, the frequency to be used for power transfer is not limited to 6.78 MHz, further matching output impedance may be set to 75Ω instead of 50Ω, and the impedance of 75Ω may be also applied to the present embodiments.

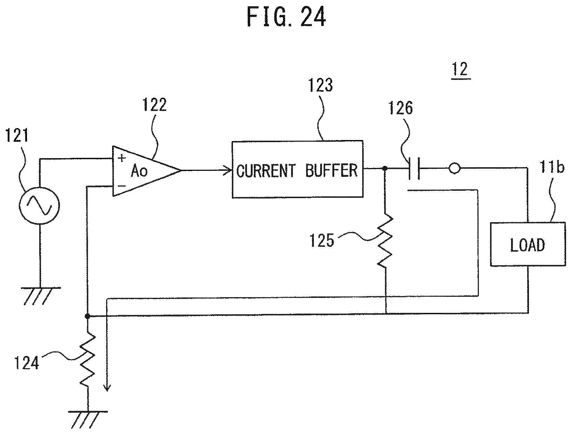

In addition, for example, the constant current power supply, which outputs a signal of 6.78 MHz to be used for performing power transfer, may be a power supply including a high output impedance (high impedance power supply: Hi-ZΩ power supply). Note that, the output impedance of the constant current power supply is not limited, but may be preferably larger than 1MΩ. The constant current power supply may be referred to as 0Ω-power supply, based on input characteristics thereof. An example of the constant current power supply will be explained later in detail with reference to FIG. 24.

In FIG. 13A and FIG. 13B, a horizontal axis represents a rotation angle of the power receiver resonance coil 21a (posture of the power receiver 2), and a vertical axis represents a power transfer efficiency. Note that, curved lines LL11 and LL21 indicate the case when the phase difference between the transmission outputs from the power source resonance coils 11aA and 11aB is at 0° (in-phase), and curved lines LL12 and LL22 indicate the case when the phase difference between the transmission outputs from the power source resonance coils 11aA and 11aB is at 90°.

Further, the curved lines LL13 and LL23 indicate the case when the phase difference between the transmission outputs from the power source resonance coils 11aA and 11aB is at 180° (reverse phase), and curved lines LL14 and LL24 indicate the case when the phase difference between the transmission outputs from the power source resonance coils 11aA and 11aB is at -90°.

Note that, it is assumed that an intensity ratio between the power transfers output from the power source resonance coils 11aA and 11aB is fixed and set to 1:1 without performing adjustment operation, and that the power receiver 2 is located at a position of the same distance from the power source resonance coils 11aA and 11aB.

First, for example, as depicted in FIG. 13A, in the case of applying a constant voltage power supply, and when output impedances of the amplifiers 171 and 172 are set to 50Ω, it will be seen that a rotation angle, where the maximum power transfer efficiency is obtained, may be changed in accordance with the phase difference between the power source resonance coils 11aA and 11aB.

Specifically, when the phase difference of the power source resonance coils 11aA and 11aB is set to 0° (LL11), it will be seen that the maximum power transfer efficiency (about 43%) is obtained by determining the rotation angle of the power receiver resonance coil 21a (power receiver 2) to 0° and 180°.

Further, when the phase difference of the power source resonance coils 11aA and 11aB is set to 90° (LL12), it will be seen that the maximum power transfer efficiency may be obtained by determining the rotation angle of the power receiver 2 to 135°, and when the phase difference of the power source resonance coils 11aA and 11aB is set to 180° (LL13), it will be seen that the maximum power transfer efficiency is obtained by determining the rotation angle of the power receiver 2 to 90°. In addition, when the phase difference of the power source resonance coils 11aA and 11aB is set to -90° (270°: LL14), it will be seen that the maximum power transfer efficiency may be obtained by determining the rotation angle of the power receiver 2 to 45°.

Therefore, it will be seen that, even when the rotation angle of the power receiver 2 is set to an optional value, that is, regarding any posture of the power receiver 2, the maximum power transfer efficiency may be obtained by preferably determining the phase difference of the power source resonance coils 11aA and 11aB.

Next, for example, as depicted in FIG. 13B, in the case of applying a constant current power supply, and when output impedances of the amplifiers 171 and 172 are set to Hi-ZΩ, characteristics different from that illustrated in FIG. 13A will be obtained.

Specifically, when the phase difference of the power source resonance coils 11aA and 11aB is set to 0° (LL21) and 180° (LL23), the above described curbed lines LL11 and LL13 are upwardly distorted about a center value of the efficiency without changing the local maximum and minimum values.

In contrast, when the phase difference of the power source resonance coils 11aA and 11aB is set to 90° (LL22) and -90° (LL24), the efficiency may be a constant value (about 27%) regardless of the rotation angle of the power receiver 2, that is, without being affected by the posture of the power receiver 2.

FIG. 14 is a diagram for illustrating another example of a wireless power transfer system with the plurality of power sources. Note that, in FIG. 12 described above, the size of the power receiver resonance coil 21a of the power receiver 2 is sufficiently smaller than that of the power source resonance coils 11a1 and 11a2. However, in FIG. 14, a size of the power receiver resonance coil 21a is set to the same degree of that of the power source resonance coils 11a1 and 11a2.

Specifically, binding properties between the power source (power source resonance coils 11a1 and 11a2) and the power receiver (power receiver resonance coil 21a) are different in the examples of FIG. 14 and FIG. 12. Note that, other features and conditions are the same as in FIG. 12 and FIG. 14, and thus explanations thereof will be omitted.

FIG. 14 is a diagram for illustrating another example of a wireless power transfer system with the plurality of power sources. Note that, in FIG. 12 described above, the size of the power receiver resonance coil 21a of the power receiver 2 is sufficiently smaller than that of the power source resonance coils 11a1 and 11a2. However, in FIG. 14, a size of the power receiver resonance coil 21a is set to the same degree of that of the power source resonance coils 11a1 and 11a2. Note that, other features and conditions are the same as in FIG. 12 and FIG. 14, and thus explanations thereof will be omitted.

FIG. 15A is a diagram for illustrating a posture dependency of a power transfer efficiency in the case of applying a constant voltage power supply in the wireless power transfer system depicted in FIG. 14, which corresponds to above described FIG. 13A. Further, FIG. 15B is a diagram for illustrating the posture dependency of a power transfer efficiency in the case of applying a constant current power supply in the wireless power transfer system depicted in FIG. 14, which corresponds to above described FIG. 13B.

Note that, in FIG. 15A and 15B, a horizontal axis represents a rotation angle of the power receiver resonance coil 21a (posture of the power receiver 2), and a vertical axis represents a power transfer efficiency. Further, curved lines LL31 and LL41 indicate the case when the phase difference between the transmission outputs from the power source resonance coils 11aA and 11aB is at 0° (in-phase), and curved lines LL32 and LL42 indicate the case when the phase difference between the transmission outputs from the power source resonance coils 11aA and 11aB is at 90°.

Further, the curved lines LL33 and LL43 indicate the case when the phase difference between the transmission outputs from the power source resonance coils 11aA and 11aB is at 180°, and curved lines LL34 and LL34 indicate the case when the phase difference between the transmission outputs from the power source resonance coils 11aA and 11aB is at -90°.

By comparing FIG. 15A and FIG. 15B with above described FIG. 13A and FIG. 13B, in the case when a size of the power receiver resonance coil 21a is set to the same degree of that of the power source resonance coils 11a1 and 11a2, a power transfer efficiency may be increased. This is because when the power receiver resonance coil 21a is large, it is possible to receive a sufficient output power from the power source resonance coils 11a1 and 11a2.

Further, as apparently depicted from a comparison of FIG. 15A and FIG. 13A, when the power receiver resonance coil 21a becomes large, and in the cases when the phase difference is at 0° (LL31) and the phase difference is at 180° (LL33), the local maximum value and the center value of the power transfer efficiency are upwardly distorted without changing the local minimum value of the power transfer efficiency. Specifically, the maximum value of the power transfer efficiency is significantly increased from about 43% depicted in FIG. 13A to about 90% depicted in FIG. 15A.

Further, when the power receiver resonance coil 21a becomes large, and in the cases when the phase difference is at 90° (LL32) and the phase difference is at -90° (LL34), both of the local maximum and minimum values of the power transfer efficiency are significantly changed.

Specifically, the local minimum values of the curved lines LL32 and LL34 approach about 70%, however, the local maximum values of the curved lines LL32 and LL34 are lower than the local maximum value of the curved lines LL31 and LL33 (but higher than 80%).

Furthermore, as apparently depicted from a comparison of FIG. 15B and FIG. 13B, when the power receiver resonance coil 21a becomes large, and in the cases when the phase difference is at 0° (LL41) and the phase difference is 180° (LL43), the local maximum value and the center value of the power transfer efficiency are upwardly distorted without changing the local minimum value of the power transfer efficiency. Note that, the curbed lines LL41 and LL43 are substantially coincident with the curbed lines LL31 and LL33 depicted in DIG. 15A.

Further, when the phase difference between the power source resonance coils 11aA and 11aB is at 90° (LL42) and -90° (LL44), the power transfer efficiency may be constant (about 75% to 84%) without being affected by the posture of the power receiver 2.

Therefore, when performing a wireless power transfer by using a plurality of power sources, it will be preferable to consider not only phase differences and intensity ratios of output signals among the plurality of power sources, but also conditions of impedance characteristics (constant current power supply/constant voltage power supply) of the power sources and a size of the power receiver resonant coil 21a.

Specifically, when performing a cooperation wireless power transfer by a plurality of power sources, so as to design a control plan to ensure a desired efficiency, it may be preferable to additionally consider the information of the impedance characteristics of the power supply and the information of binding properties between the power receiver and the power sources.

Therefore, power levels of respective power sources may be determined by selecting a combination of variable parameters for obtaining desired power transfer efficiency characteristics, so that, for example, power transfer by the maximum power transfer efficiency or a power transfer by a high robustness efficiency may be selectively realized.

Note that, the high robustness efficiency, for example, when charging power to a sensor network regardless of orientation of each sensor, a large effect of performing the wireless power transfer may be obtained. Further, the above explanations with reference to FIG. 12 to FIG. 15A are only examples, and various modifications may be possible.

FIG. 16 is a block diagram for illustrating an example of a wireless power transfer system of the present embodiment, wherein two power sources 1A and 1B, and two power receivers 2A and 2B are included.

As depicted in FIG. 16, the power sources 1A and 1B include the same configurations, and the power source 1A, 1B includes a wireless power transfer unit 11A, 11B, a high frequency power supply unit 12A, 12B, a power transfer control unit 13A, 13B, and a communication circuit unit 14A, 14B.

The high frequency power supply unit 12A, 12B generates an electric power of a high frequency, for example, which corresponds to the high frequency power supply unit 12 depicted in FIG. 1 as described above, or corresponds to the amplifier 171, 172 including a specific power supply impedance depicted in FIG. 12 and FIG. 14. For example, the high frequency power supply unit 12A, 12B is a constant voltage power supply including an output impedance which is matched to 50Ω or a Hi-ZΩ power supply (constant current power supply) including a high output impedance, and the like.

The power transfer control unit 13A, 13B controls the wireless power transfer unit 11A, 11B, and may include, for example, an oscillator 15 and a phase control unit 16 as depicted in FIG. 12 and FIG. 14. The communication circuit unit 14A, 14B enables to communicate among the power sources and the power receivers, which may be realized by using, for example, a DSSS type wireless LAN based on the IEEE 802.11b or a Bluetooth (registered trademark).

Note that, the high frequency power supply unit 12A, 12B receives a power from an external power supply 10A, 10B, and the power transfer control unit 13A, 13B receives a signal from a detection unit SA, SB, respectively. Note that, for example, the power sources 1A and 1B may be formed as two wireless power transfer units (11) provided in one power source 1.

The wireless power transfer unit 11A, 11B corresponds to a coil in the case of applying magnetic field resonance, and converts a high frequency power output from the high frequency power supply unit 12A, 12B into magnetic field. The detection unit SA, SB detects a positional relationship of the power sources 1A and 1B or a positional relationship of the power receivers 2A and 2B. Note that, a method for detecting the positional relationship may be applied, for example, an imaging system by using a plurality of cameras.

Note that, for example, the positional relationship of the power sources 1A and 1B is fixed (power source resonance coils 11a1 and 11a2 are fixed as a particular L-shaped block), when the information is confirmed by the power transfer control units 13A and 13B and the power receivers 2A and 2B include detection function thereof, the detection units SA and SB may be omitted.

Further, the power receivers 2A and 2B include the same configurations, and the power receiver 2A, 2B includes a wireless power reception unit 21A, 21B, a rectifier (power receiving circuit) 22A, 22B, a power reception control unit 23A, 23B, a communication circuit unit 24A, 24B, and an apparatus body (battery unit) 25A, 25B.

The power reception control unit 23A, 23B controls the power receiver 2A, 2B, and the communication circuit unit 24A, 24B enables to communicate among the power sources and the power receivers, which may be realized by using, for example, a Bluetooth (registered trademark).

In the case of transferring power by using magnetic field resonance, the wireless power receiving unit 21A, 21B is equivalent to a coil for converting an electric power wirelessly transmitted to a current. The rectifier 22A, 22B converts an alternating current obtained by the wireless power receiving unit 21A, 21B to a direct current used for charging a battery or driving an apparatus body.

As described above, the power sources 1A and 1B, and the power receivers 2A and 2B may communicate each other by using respective communication circuit units 14A, 14B and 24A, 24B. Note that, for example, when the power source 1A is determined as a master (entire controller), this master (power source) 1A may control the other power source 1B and power receivers 2A and 2B as slaves.

Further, it is not limited to a wireless power transfer using magnetic field resonance between the wireless power transfer units 11A and 11B, and the wireless power reception units 21A or 21B, but, for example, electric field resonance, electromagnetic induction, and electric field induction may be also applied to the wireless power transfer system.

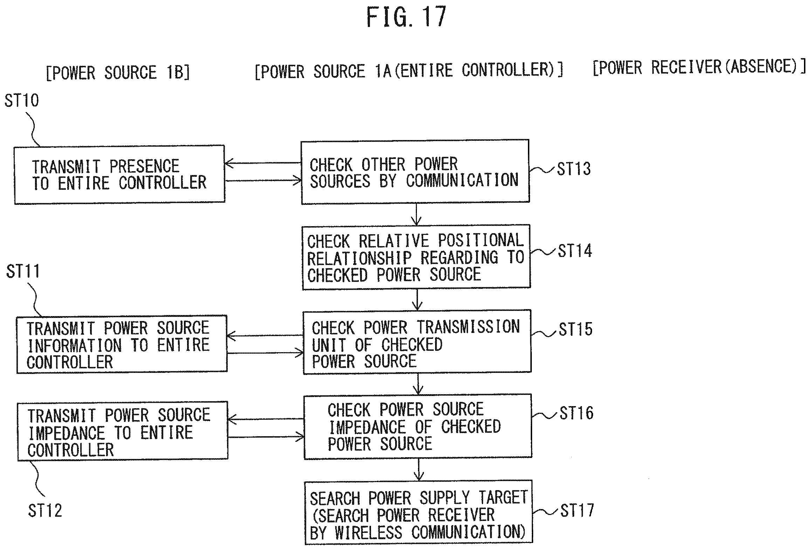

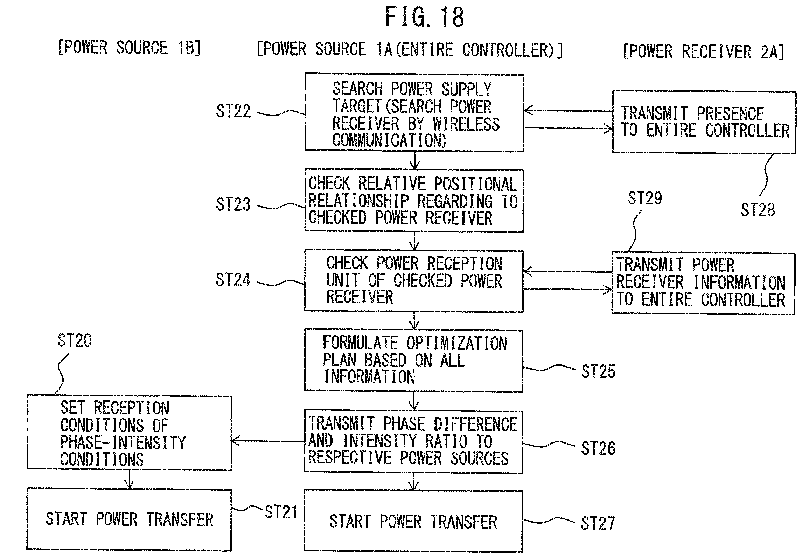

FIG. 17 and FIG. 18 are flowcharts for illustrating examples of processes in the wireless power transfer system depicted in FIG. 16. Specifically, FIG. 16 illustrates the process when the power receiver is absent, and FIG. 17 illustrates the process when the power receiver is present.

Note that, FIG. 17 and FIG. 18 illustrate the case when the power source 1A is a master (entire controller) and the power source 1B is a slave. For example, communication between the slave power source 1B and the master power source 1A is performed by the communication circuit units 14A and 14B, and communication between the power receivers 2A, 2B and the master power source 1A is performed by the communication circuit units 24A, 24B and 14A.

First, as depicted in FIG. 17, in step ST13, the master power source 1A checks to detect other power sources (slave power source 1B) and confirms the other power source (slave power source 1B) by using communication. The communication may be performed by either wireless or wired.

Specifically, in step ST10, the slave power source 1B transmits a presence of the other power source to the master power source 1A, and when the master power source 1A may establish the communication with the other power source and confirm an ID of the other power source in step ST13, the master power source 1A may determine the presence of the other power source. Note that, when the master power source 1A does not detect the other power source, the power transfer is performed based on single power source, which is already explained with reference to FIG. 10.

After, the master power source 1A detects the other power source (slave power source 1B), in step ST14, for example, the master power source 1A checks a relative positional relationship regarding to the slave power source 1B using a detection unit SA. Note that, when the relative position of the master power source 1A and the slave power source 1B does not overlap a transfer range, for example, relative distances thereof are faraway, etc., the power transfer is performed based on a single power source, which is already explained with reference to FIG. 10.

In step ST14, the master power source 1A checks a relative positional relationship regarding to the slave power source 1B by using, for example, a detection unit SA. In the case of detecting a possibility that the transfer ranges overlap the other power source (slave power source 1B), the processing proceeds to step ST15. Specifically, in step ST11, the slave power source 1B transmits power source information to the master power source 1A, and the master power source 1A confirms the position of the power transfer unit (wireless power transfer unit) 11B of the slave power source 1B.

Further, in step ST12, the slave power source 1B transmits a power supply impedance to the master power source 1A, and the processing proceeds to step ST16, the master power source 1A checks the power supply impedance of the power source 1B.

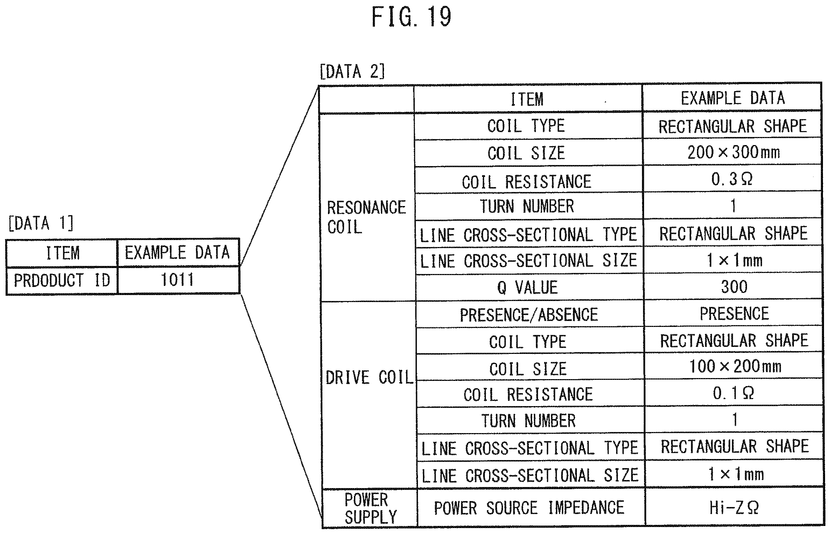

Specifically, in steps ST12 and ST16, it is determined whether the power supply of the slave power source 1B and the power supply of itself (master power source 1A) are constant voltage power supplies matched to, for example, 50Ω or constant current power supplies of Hi-ZΩ. The information transmitted from the slave power source 1B to the master power source 1A is, for example, information (data) which will be explained later in detail with reference to FIG. 19.

Further, the processing proceeds to step ST17, the master power source 1A searches a power supply target. This power supply target search operation is performed by using respective communication circuit units (14A, 14B, 24A, 24B), and he master power source 1A searches power receivers 2A and 2B.

In the above descriptions, the slave power sources may be plural. Further, the search operation for searching power receivers (2A, 2B) performed by the master power source 1A may be carried out by wireless communications, and the search operation for searching power receivers may be continuously performed until a power receiver of the target receiver is found.

As depicted in FIG. 18, in step ST22, the master power source 1A (entire controller) searches target power receivers, that is, power receivers (2A, 2B). In step ST28, the power receiver 2A transmits a presence to the master power source 1A. Note that, FIG. 18 illustrates the case of performing power transfer to the power receiver 2A, this power receiver 2A is also functioned as a slave to the master power source 1A.

Specifically, in step ST28, the slave power receiver 2A transmits a presence of itself to the master power source 1A, the processing proceeds to step ST22, the master power source 1A establishes a communication with the other power receiver, and the master power source 1A determines that the other power receiver may be searched when ID thereof is confirmed.

After, the master power source 1A detects the other power receiver (slave power receiver 2A), in step ST23, the master power source 1A, for example, checks a relative positional relationship regarding to the slave power receiver 2A. Note that, when the transfer ranges do not overlap, for example, the relative positions of the master power source 1A and the slave power receiver 2A are far away, and the like, the master power source 1A determines that the other power receiver is not detected.

Further, the processing proceeds to step ST24, the master power source 1A checks a power reception unit (wireless power reception unit) 21A of the confirmed slave power receiver 2A. Specifically, in step ST29, the slave power receiver 2A transmits power receiver information to the master power source 1A.

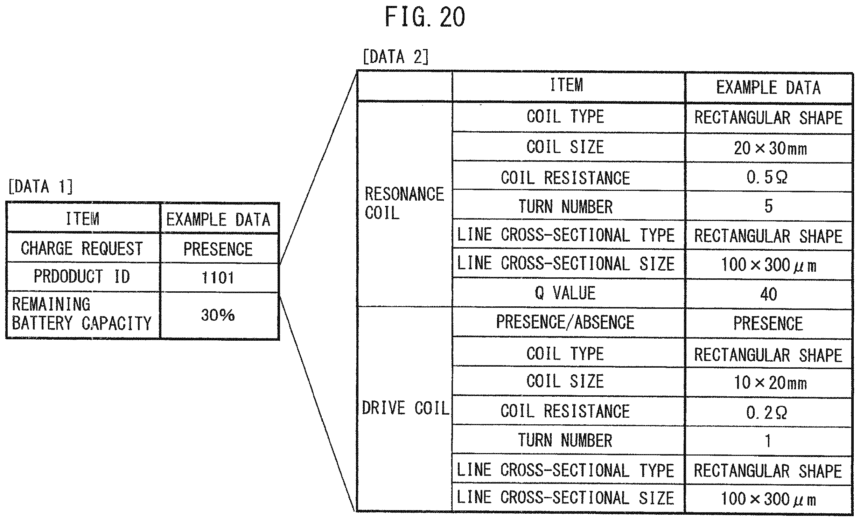

This power receiver information includes, for example, information such as a size of the power receiver resonance coil (21a) of the power receiver 2A, and the like. The information transmitted from the slave power receiver 2A to the master power source 1A is, for example, information (data) which will be explained later in detail with reference to FIG. 20

Next, the processing proceeds to step ST25, the master power source 1A formulates an optimization plan based on all information. Note that, the all information to be used for the master power source 1A may include, for example, the power supply impedance information checked in step ST16 depicted in FIG. 17, and the size information of the power receiver resonance coil (21a) of the power receiver 2A, checked in step ST24, and the like.

Further, the processing proceeds to step ST26, the master power source 1A transmits a phase difference and an intensity ratio (phase-intensity conditions) to the respective power sources (slave power source 1B). In step ST20, the slave power source 1B receives the phase-intensity conditions from the master power source 1A, and the processing proceeds to step ST21, the slave power source 1B starts power transfer in accordance with the phase-intensity conditions.

Further, the processing proceeds to step ST27, the master power source 1A starts power transfer. Note that, the start of power transfer by the master power source 1A in step ST27 and the start of power transfer by the slave power source 1B in step ST21 may be synchronously performed by using, for example, the communication circuit units 14A and 14B.

FIG. 19 is a diagram for illustrating an example of the transmission information between the power sources, for example, an example of transmission information of transmitting information from the slave power source 1B to the master power source 1A. As depicted in FIG. 19, the transmission information transmitted from the slave power source 1B to the master power source 1A includes, for example, a product ID of DATA 1, or actual data of respective items as depicted in DATA 2.

Note that, for example, when a product ID "1011" is transmitted from the slave power source 1B to the master power source 1A, the master power source 1A may read out data from a memory table, which is previously provided in the master power source 1A, and the master power source 1A may recognize the respective items of DATA 2 which corresponds to DATA 2 based on the transmitted product ID as similar to the above.

Alternatively, it is possible that the master power source 1A connects to the Internet via a wired or wireless line, and downloads the latest data corresponding to the transmitted product ID from a predetermined external server or web site, so that the master power source 1A may recognize data of the respective items.

Note that, the information transmitted from the slave power source 1B to the master power source 1A (data of the respective items) may include, for example, the information of the power source resonance coil 11aB and the power supply coil 11bB, and also the information relating to the power supply impedances as described above. In addition, the items depicted in FIG. 19 are only an example, and the items may be variously modified.

FIG. 20 is a diagram for illustrating an example of the transmission information between the power source and the power receiver, for example, illustrates an example of information transmitted from the slave power receiver 2A to the master power source 1A. As depicted in FIG. 20, the transmission information transmitted from the slave power receiver 2A to the master power source 1A includes, for example, a product ID, a charge request and a remaining battery capacity as depicted in DATA 1.

Similar to the above explanations with reference to FIG. 19, when a product ID "1011" is transmitted from the slave power receiver 2A to the master power source 1A, the master power source 1A may recognize the respective items as depicted in DATA 2 by using a memory table provided in the master power source 1A or a predetermined web site via the Internet.

Note that, the slave power receiver 2A may transmit information in addition to the charge request and the remaining battery capacity to the master power source 1A, for example, information of respective actual items as depicted in DATA 2 instead of the product ID. In addition, the items depicted in FIG. 20 are only an example, and the items may be variously modified.

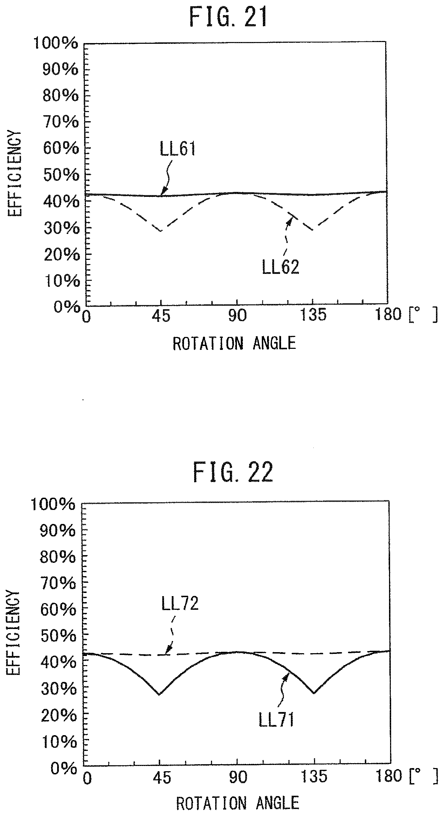

FIG. 21 is a diagram for illustrating an optimization process of parameters in the case of applying a constant voltage power supply in the wireless power transfer system depicted in FIG. 12, and illustrates simulation results by using the constant voltage power supply including an output impedance of 50Ω.

In FIG. 21, a curved line LL61 indicates change of a power transfer efficiency with respect to a rotation angle of the power receiver resonance coil 21a (power receiver 2) when an intensity ratio of output signals of the power source resonance coils 11a1 and 11a2 (amplifiers 171 and 172) is fixed and a phase difference is optimized.

Further, a curved line LL62 indicates change of a power transfer efficiency with respect to a rotation angle of the power receiver 2 when a phase difference of the output signals of the power source resonance coils 11a1 and 11a2 is fixed to 0° (in-phase) or 180° (reverse phase), and an intensity ratio is optimized.

As apparently depicted in FIG. 21, in the case of applying a constant voltage power supply including an output impedance of 50Ω, and fixing the phase difference of the output signals, the maximum efficiency may not always obtained by variously adjusting the intensity ratio.

Specifically, in the case of applying a constant voltage power supply, wherein the phase difference of the output signals is fixed, it will be seen that, in a specific posture of the power receiver, the maximum power transfer efficiency may not be obtained even if the intensity ratio of the output signals is variously adjusted.

In contrast, for example, in the case of applying a constant voltage power supply of 50Ω, it will be seen that the maximum power transfer efficiency may be always obtained by fixing the intensity ratio of the output signals and variously adjusting the phase difference of the output signals.

Therefore, in the case of applying a constant voltage power supply as the power source (wireless transmission unit), it is preferable to adjust the phase difference of the output signals with fixing the intensity ratio of the output signals, and it will be seen that the dominant parameter for optimizing to obtain the maximum power transfer efficiency is the phase difference of the output signals.

FIG. 22 is a diagram for illustrating an optimization of the parameters in the case of applying a constant current power supply in a wireless power transfer system depicted in FIG. 12, and illustrates simulation results by using the constant current power supply of including an output impedance of Hi-ZΩ.

In FIG. 22, a curved line LL71 indicates change of a power transfer efficiency with respect to a rotation angle of the power receiver 2 when an intensity ratio of output signals is fixed and a phase difference is optimized. Further, a curved line LL72 indicates change of a power transfer efficiency with respect to a rotation angle of the power receiver 2 when a phase difference of the output signals is fixed to in-phase or reverse phase, and an intensity ratio is optimized.

As apparently depicted in FIG. 22, in the case of applying a constant current power supply of Hi-ZΩ, and fixing the intensity ratio of the output signals, the maximum efficiency may not always obtained, even if the phase difference of the output signals are variously adjusted.

Specifically, in the case of applying a constant current power supply, wherein the intensity ration of the output signals is fixed, it will be seen that, in a specific posture of the power receiver, the maximum power transfer efficiency may not be obtained even if the phase difference of the output signals is variously adjusted.

In contrast, for example, in the case of applying a constant current power supply of Hi-ZΩ, it will be seen that the maximum power transfer efficiency may be always obtained by fixing the phase difference of the output signals to in-phase or reverse phase and variously adjusting the intensity ratio of the output signals.

Therefore, in the case of applying a constant current power supply as the power source (wireless transmission unit), it is preferable to adjust the intensity ratio of the output signals with fixing the phase difference of the output signals, and it will be seen that the dominant parameter for optimizing to obtain the maximum power transfer efficiency is the intensity ratio of the output signals.

As described above, when formulating an optimization plan, it will be understood that a dominant or effective parameter is changed in accordance with an impedance of a power supply. Specifically, it is important to add impedance information of the power supply so as to formulate an optimization plan where a desired efficiency may be obtained.

After an optimization plan is formulated, in the wireless power transfer system depicted in FIG. 12, setting conditions corresponding to the formulated optimization plan are transmitted to the phase control unit 16 and the amplifiers 171 and 172 of the power source 1, and then, power transfer based on the setting conditions may be started.

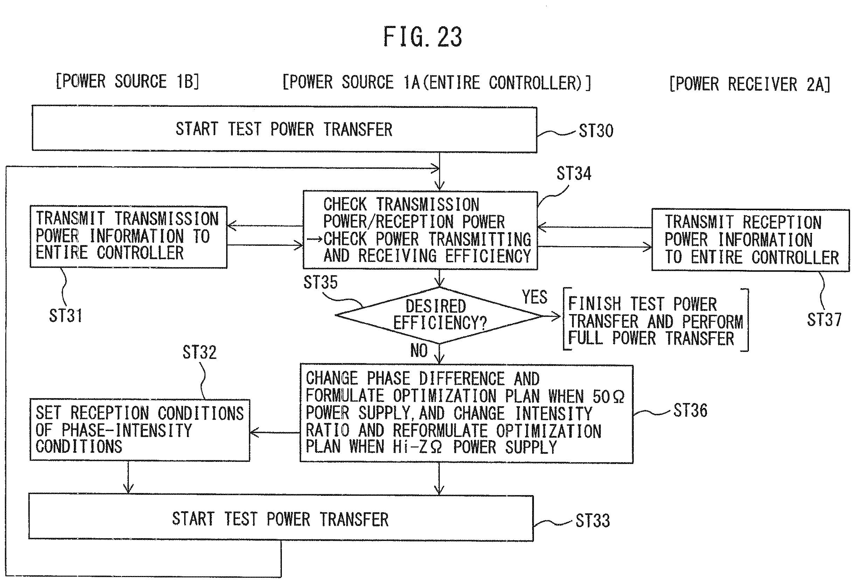

As described above, the power transfer may be performed by the setting conditions in accordance with the formulated optimization plan, however, if the power transfer may not sufficiently adjusted by the setting conditions, it is preferable to perform a test power transfer. FIG. 23 is a flowchart illustrating an example of the optimization processes of parameters depicted in FIG. 21 and FIG. 22, and illustrates an example of performing a test power transfer.

As depicted in FIG. 23, in step ST30, when starting the test power transfer, the processing proceeds to step ST34, the power source 1A checks a transmission power and a reception power, and also checks a power transmitting and receiving efficiency (power transfer efficiency). Specifically, in step ST31, the slave power source 1B transmits a transmission power of itself to the entire controller (master power source 1A), and in step ST37, the slave power receiver 2A transmits a reception power of itself to the master power source 1A.

The processing proceeds to step ST35, and the master power source 1A determines whether or not the checked power transmitting and receiving efficiency is a desired efficiency. In step ST34, it is determined that the checked power transmitting and receiving efficiency is the desired efficiency, the test power transfer is finished and a full power transfer is performed.

On the other hand, in step ST34, it is determined that the checked power transmitting and receiving efficiency is not the desired efficiency, the processing proceeds to step ST36, an optimization plan is reformulated by changing a dominant parameter corresponding to the power supply impedance as explained with reference to FIG. 21 and FIG. 22.

Specifically, in step ST36, in the case of applying a power supply of 50Ω, the optimization plan may be reformulated by changing the phase difference of the power supply. On the other hand, in the case of applying a power supply of Hi-ZΩ, the optimization plan may be reformulated by changing the intensity ratio of the power supply. Therefore, the optimization plan may be reformulated in a short time by adjusting the dominant parameter in accordance with the power supply impedance.

Note that, in step ST36, the master power source 1A sets a phase and an intensity in accordance with the reformulated optimization plan, the processing proceeds to step ST33, and a test power transfer may be restarted. In step ST33, the master power source 1A restarts the test power transfer, and then the processing returns to step ST34, the similar processes may be repeatedly performed.

In step ST32, the slave power source 1B receives the phase and intensity conditions which are determined in accordance with the reformulated optimization plan in step ST36, sets the received phase and intensity conditions, and the processing proceeds to step ST33, the test power transfer may be restarted.

After starting the test power transfer in step ST33, the processing returns to step ST34, and the slave power source 1B repeats the similar processes.

Therefore, in the test power transfer as described above, for example, the phase difference and the intensity ration are not independently changed, but the dominant parameter obtained from the power supply impedance information is changed, so that it may be possible to formulate an optimization plan in a short time.

Below, embodiments of a wireless power transfer method will be explained. Note that, a first embodiment is a wireless power transfer method where power transfer efficiency is prioritized, and the second embodiment is a wireless power transfer method where a high-robust is prioritized.

The first embodiment used to prioritize the power transfer efficiency will be explained. For example, power transfer for portable electronic devices (for example, power capacity of several Watts to several dozen Watts), a transferring power is relatively large, and thus, a high efficiency may be required. In general, when the power transfer efficiency is decreased, an electric power may be consumed and a temperature of the power source may be increased, especially, this problem is serious when the transferring (transmitting) power becomes large.

For example, in portable electronic devices such as smart phones, various sensors are originally provided, and various types of information obtained by the various sensors may be transmitted from the portable electronic devices to the power source side (master power source). This means, for example, in a three-dimensional wireless power transfer system, the master power source may be obtained relative positional relationship information of the power receiver.

Therefore, for example, in power transferring to portable electronic devices, it is preferable to control an adjustment of each of the power sources so as to obtain the maximum efficiency based on the position information of the power receiver. That is, for example, in the wireless power transfer system depicted in FIG. 12, it is preferable to perform the above explained processes with reference to FIG. 21 and FIG. 22, so as to obtain the maximum transmitting and receiving efficiency (power transfer efficiency).

Specifically, in the case of applying a constant voltage power supply (50Ω power supply) for transferring power, as explained with reference to FIG. 21, the phase difference is varied with fixing the intensity ratio of the power supply, so that the maximum efficiency may be obtained. Alternatively, in the case of applying a constant current power supply (Hi-ZΩ power supply), as explained with reference to FIG. 22, the intensity ratio is varied with fixing the phase difference of the power supply for transferring power, so that the maximum efficiency may be obtained.

Next, the second embodiment used to prioritize the high-robust will be explained. For example, power transfer for respective sensors in a sensor network (for example, power capacity of several µW (micro Watts) to several mW (milli Watts)), a transferring power is relatively small, and thus, the efficiency may not be important.

In the case of assuming that the transferring (transmitting) power is at 10 mW, even though the efficiency is about 10%, the generated heat of the power transfer system is at most about 100 mW, and heat radiation may be easily performed. On the other hand, each of the sensors is required to constitute a small size and a low cost, and thus posture detect functions may not provide on all of the sensors as the portable electronics devices.

Therefore, in a sensor network, it is not possible to individually obtain posture information of each of the sensors, and as a result, power transfer to the sensor network, it is preferable to obtain a constant efficiency regardless of the posture of the power receiver (respective sensors), to perform a high robust control against the posture.

Therefore, for example, in the case of transferring power to respective sensors of the sensor network, for example, as explained with reference to above FIG. 13B (curved lines LL22 and LL24), it is preferable to use an output impedance of Hi-ZΩ and determine the phase difference to 90° (-90°).

Note that, in FIG. 13B, those curved lines LL22 and LL24 are the case when the phase difference of power transmission outputs of the power source resonance coils 11aA and 11aB is at 90° and -90°, however, the phase difference is not limited to these values.

Specifically, when the phase difference may be shifted in a certain range from 90° and -90°, although affected by the rotation angle may become large, a high robust in the practical postures may be obtained.

Note that, as explained with reference to FIG. 13A, for example, in the case of applying a constant voltage power supply whose output impedance is 50Ω, it is difficult to obtain the high robust by determining the phase difference to 90° (-90°).

FIG. 24 is a block diagram for illustrating an example of a constant current power supply, and an example of a high-frequency power supply unit 12. As depicted in FIG. 24, the constant current power supply 12 includes an AC signal generation unit 121, an operational amplifier (op amp) 122, a current buffer 123, a reference resistor 124, a feedback resistor 125 and a capacitor 126, and an output terminal of the constant current power supply 12 is connected with a load. The load corresponds to a power supply coil (first coil) 11b.

The AC signal generation unit 121 generates a reference AC voltage (for example, frequency is at 6.78 MHz, and magnitude of the AC voltage is constant), and the reference AC voltage is applied to a non-inverting input (positive input) of the operational amplifier 122. Note that, an inverting input (negative input) of the operational amplifier 122 is grounded via the reference resistor 124, and an output signal of the operational amplifier 122 is input to the current buffer 123.

The constant current power supply (and the constant voltage power supply) to be applied to the present embodiment is not limited to those for outputting a signal of 6.78 MHz, but of course the frequency may be varied in accordance with the frequency to be used for power transfer.

An output of the current buffer 123 is input to one end of a load (power supply coil) 11b via the capacitor 126, and grounded via the feedback resistor 125 and the reference resistor 124. The other end of the power supply coil 11b is grounded via the reference resistor 124.

In the constant current source (12) depicted in FIG. 24, an output impedance thereof is at a high impedance (Hi-ZΩ). Further, the constant current power supply of FIG. 24 is merely one example, various constant current power supplies may be applied to the present embodiments.

Specifically, in a communication technical art, for example, various types of constant voltage power supplies matched to 50Ω is widely used, and those constant voltage power supplies may be applied to the present embodiments.

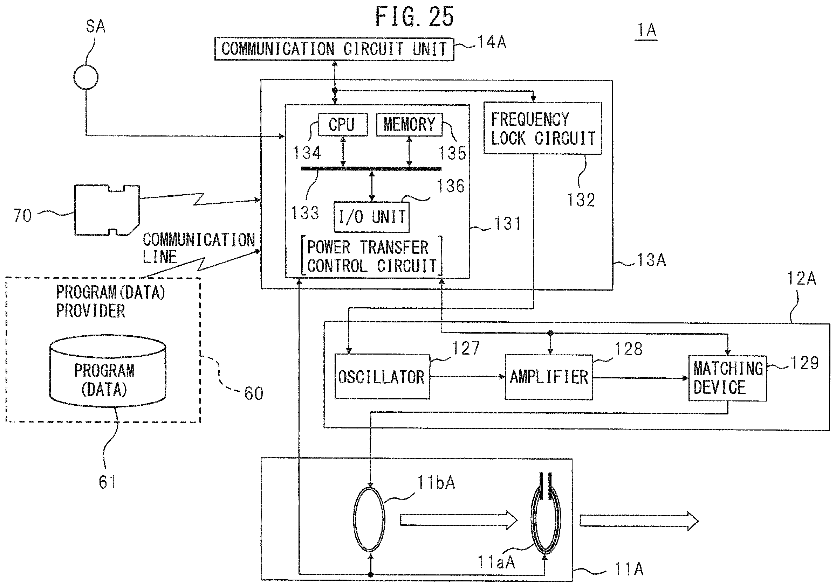

FIG. 25 is a block diagram for illustrating an example of the power source (master power source 1A) in the wireless power transfer system depicted in FIG. 16. As depicted in FIG. 21 and FIG. 16, in the master power source 1A, the wireless power transfer unit 11A includes an LC resonator 11aA and a power supply coil 11bA. A high frequency power supply unit 12A includes an oscillator 127, an amplifier 128 and a matching device 129.

The power transfer control unit 13A includes a power transfer control circuit 131 and a frequency lock circuit 132. The frequency lock circuit 132 receives a synchronization signal from the communication circuit unit 14A, and performs a synchronization process of the oscillator 127 by a predetermined interval (for example, several minutes to several ten minutes interval). The oscillator 127 generates a driving signal having a predetermined frequency (for example, 6.78 MHz), and the driving signal is output to the wireless power transfer unit 11A (power supply coil 11bA) via the amplifier 128 and the matching device 129.

The power transfer control circuit 131 includes a CPU (processor) 134 connected by an internal bus 133, a memory 135 and an input-output circuit (I/O unit) 136. The memory 135 includes a rewritable non-volatile memory, e.g., a flash memory, and a DRAM (Dynamic Random Access Memory), and the like. Then, various processes (software programs) may be performed in the master power source 1A, the slave power source 1B and power receivers.

The master power source 1A includes, for example, a detection unit SA for checking a relative positional relationship between the master power source 1A and the slave power source 1B. The output of the detection unit SA is, for example, input to the CPU 134 via the I/O unit 136, and is used to perform a software program (wireless power transfer program, or control program of the power source) stored in the memory 135.

The wireless power transfer program (control program of the power source) stored in a portable recording medium (for example, an SD (Secure Digital) memory card) 70, may be stored in the memory 135 via the I/O unit 136.

Alternatively, the program may be read out from a hard disk device 61 of a program (data) provider 60 via a communication line and the I/O unit 135, and stored in the memory 135. The communication line from the hard disk device 61 to the I/O unit 136 may be a wireless communication line by using the communication circuit unit 14.

Further, the recording medium (computer-readable recording medium) to which the portable wireless power transfer program is recorded may be a DVD (Digital Versatile Disk), a Blu-ray disc (Blu-ray Disc), and the like.

In the above description, power source and power receiver, which has been described mainly as one or two, it may be a larger number, respectively. Further, in the description of respective embodiments, a power transfer is mainly explained by using magnetic field resonance. Nevertheless, the present embodiment may apply to the power transfer using electric field resonance, and to the power transfer using electromagnetic induction or electric field induction.

Specifically, the present embodiment may also apply to a wireless power transfer system including at least two power sources wherein outputs of the at least two power sources affect each other. Note that, each of the power sources may include at least one power transfer coil, and at least one of the phase or intensity of an output of the power transfer coil may be independently controlled.

Furthermore, this embodiment is the same as the wireless power transfer system including at least two power sources, may also be applied to at least two power sources wireless power transfer system output mutually affect each other. Each of the power sources includes, for example, at least one transmitting coil enabling to independently control at least one of the phase or intensity.

All examples and conditional language provided herein are intended for the pedagogical purposes of aiding the reader in understanding the invention and the concepts contributed by the inventor to further the art.

Further, the above examples and conditions are not to be construed as limitations to such specifically recited examples and conditions, nor does the organization of such examples in the specification relate to a showing of the superiority and inferiority of the invention.

In addition, although one or more embodiments of the present invention have been described in detail, it should be understood that the various changes, substitutions, and alterations could be made hereto without departing from the scope of the invention.

### REFERENCE SIGNS LIST

1 Power source (primary side, power source side) 1A to 1D Power sources
2 Power receiver (secondary side, power receiver side) 2A to 2E Power receivers
10A, 10B External power supply
11, 11A, 11B Wireless power transfer unit
11a, 11aA, 11aB, 11a1, 11a2 power source resonance coil (second coil, LC resonator)
11b, 11bA, 11bB Power supply coil (first coil)
12, 12A, 12B High frequency power supply unit
13, 13A, 13B Power transfer control unit
14, 14A, 14B Communication circuit unit (first communication circuit unit)
15 Oscillator
16 Phase control unit
21, 21A, 21B Wireless power reception unit
21a, 21aA, 21aB Power receiver resonance coil (third coil, LC resonator)
21b, 21bA, 21bB Power extraction coil (fourth coil)
22, 22A, 22B Power reception circuit unit (rectifier unit)
23, 23A, 23B Power reception control unit
24 Communication circuit unit (second communication circuit unit)
25 Battery unit (load)
60 Program (data) provider
61 Hard disk drive
70 Portable recording medium
127 Oscillator
128 Amplifier
129 Matching device
131 Power transfer control circuit
132 Frequency lock circuit
133 Internal bus
134 CPU (Central Processing Unit)
135 Memory
136 Input and output circuit (I/O unit)
171, 172 Amplifier

## Claims

1. A power source (1) including a first power supply coil (11a1) and a second power supply coil (11a2) which are mutually affecting, comprising:
a first power supply (12, 171) configured to drive the first power supply coil (11a1);
a second power supply (12, 172) configured to drive the second power supply coil (11a2); and
a power transfer control unit (13) configured to control a phase difference and an intensity ratio between an output signal of the first power supply coil (11a1) and an output signal of the second power supply coil (11a2) based on impedance information of the first power supply and the second power supply; **characterized in that**
the power transfer control unit (13) is configured to independently control a phase and an intensity of the output signal of the first power supply coil (11a1) via the first power supply.

2. The power source (1) as claimed in claim 1, wherein
the power transfer control unit (13) is configured to independently control one of a phase and an intensity of the output signal of the second power supply coil (11a2) via the second power supply.

3. The power source (1) as claimed in claim 1 or 2, wherein
the power transfer control unit (13) is configured to control the phase difference and the intensity ratio between the output signal of the first power supply coil (11a1) and the output signal of the second power supply coil (11a2), in accordance with binding properties of the first power supply coil and the second power supply coil, and a power receiver coil (21a) of at least one power receiver (2) which receives power from the power source.

4. The power source (1) as claimed in any one of claims 1 to 3, wherein
the power transfer control unit (13) is configured to control to fix the intensity ratio between the output signal of the first power supply coil (11a1) and the output signal of the second power supply coil (11a2) and to optimize the phase difference, when the first power source and the second power source are constant voltage power supplies.

5. The power source (1) as claimed in any one of claims 1 to 3, wherein
the power transfer control unit (13) is configured to control to fix the phase difference between the output signal of the first power supply coil (11a1) and the output signal of the second power supply coil (11a2) and to optimize the intensity ratio, when the first power source and the second power source are constant current power supplies.

6. The power source (1) as claimed in any one of claims 1 to 5, wherein
the first power supply coil (11a1) and the second power supply coil (11a2) are resonance coils transferring power by using magnetic field resonance or electric field resonance.

7. A wireless power transfer system comprising a first power source (1A) including a first power supply coil (11aA) and a second power source (1B) including a second power supply coil (11aB) which are mutually affecting, and power being transferred to at least one power receiver (2) in wireless, wherein wireless power transfer system comprises:
a first power supply (12, 171) configured to drive the first power supply coil (11aA);
a second power supply (12, 172) configured to drive the second power supply coil (11aB); and
a power transfer control unit (13) configured to control a phase difference and an intensity ratio between an output signal of the first power supply coil (11aA) and an output signal of the second power supply coil (11aB) based on impedance information of the first power supply and the second power supply;
**characterized in that** the power transfer control unit (13) is configured to independently control a phase and an intensity of the output signal of the first power supply coil (11aA) via the first power supply.

8. The wireless power transfer system as claimed in claim 7, wherein
the power transfer control unit (13) is a master power transfer control unit which is one of the first power supply or the second power supply.

9. The wireless power transfer system as claimed in claim 7, wherein
the power transfer control unit (13) is configured to independently control at least one of a phase and an intensity of the output signal of the second power supply coil (11aB) via the second power supply.

10. The wireless power transfer system as claimed in any one of claims 7 to 9, wherein
the power transfer control unit (13) is configured to control the phase difference and the intensity ratio between the output signal of the first power supply coil (11aA) and the output signal of the second power supply coil (11aB), in accordance with binding properties of the first power supply coil and the second power supply coil, and the power receiver coil (21a) of the power receiver (2).

11. The wireless power transfer system as claimed in any one of claims 7 to 10, wherein
the power transfer control unit (13) is configured to control to fix the intensity ratio between the output signal of the first power supply coil (11aA) and the output signal of the second power supply coil (11aB) and to optimize the phase difference, when the first power source and the second power source are constant voltage power supplies.

12. The wireless power transfer system as claimed in any one of claims 7 to 10, wherein
the power transfer control unit (13) is configured to control to fix the phase difference between the output signal of the first power supply coil (11aA) and the output signal of the second power supply coil (11aB) and to optimize the intensity ratio, when the first power source and the second power source are constant current power supplies.

13. The wireless power transfer system as claimed in any one of claims 7 to 12, wherein
the first power supply coil (11aA) and the second power supply coil (11aB) are resonance coils transferring power by using magnetic field resonance or electric field resonance.

14. A wireless power transfer method using a power source or wireless transfer power system including a first power supply coil (11a1; 11aA) and a second power supply coil (11a2, 11aB) which are mutually affecting, for transferring power to at least one power receiver (2) in wireless, wherein the power source or system comprises:
a first power supply (12, 171) configured to drive the first power supply coil (11a1; 11aA); and
a second power supply (12, 172) configured to drive the second power supply coil (11a2; 11aB), wherein the wireless power transfer method comprises:
controlling a phase difference and an intensity ratio between an output signal of the first power supply coil (11a1; 11aA) and an output signal of the second power supply coil (11a2; 11aB), based on impedance information of the first power supply and the second power supply,
**characterized in that** a phase and an intensity of the output signal of the first power supply coil (11a1; 11aA) is independently controlled by the first power supply, and a phase and an intensity of the output signal of the second power supply coil (11a1; 11aA) is controlled by the second power supply.

15. The wireless power transfer method as claimed in claim 14, comprising
controlling the phase difference and the intensity ratio between the output signal of the first power supply coil (11a1; 11aA) and the output signal of the second power supply coil (11a2; 11aB), in accordance with binding properties of the first power supply coil and the second power supply coil, and the power receiver coil (21a) of the power receiver (2).

16. The wireless power transfer method as claimed in claim 14 or 15, wherein the wireless power transfer method further comprises:
performing a test power transfer to adjust the output signals of the first power supply coil (11a1; 11aA) and the second power supply coil (11a2; 11aB), wherein
in the test power transfer,
controlling to fix the intensity ratio between the output signal of the first power supply coil (11a1; 11aA) and the output signal of the second power supply coil (11a2; 11aB) and to optimize the phase difference, when the first power source and the second power source are constant voltage power supplies, and
controlling to fix the phase difference between the output signal of the first power supply coil (11a1; 11aA) and the output signal of the second power supply coil (11a2; 11aB) and to optimize the intensity ratio, when the first power source and the second power source are constant current power supplies.

17. A wireless power transfer program for transferring power to at least one power receiver in wireless, from a power source or wireless power transfer system including a first power supply coil (11a1; 11aA) and a second power supply coil (11a2; 11aB) which are mutually affecting, a first power supply driving the first power supply coil, and a second power supply driving the second power supply coil, wherein the wireless power transfer program causes a computer to execute:
controlling a phase difference and an intensity ratio between an output signal of the first power supply coil (11a1; 11aA) and an output signal of the second power supply coil (11a2; 11aB), based on impedance information of the first power supply and the second power supply,
**characterized in that** a phase and an intensity of the output signal of the first power supply coil (11a1; 11aA) is independently controlled by the first power supply, and a phase and an intensity of the output signal of the second power supply coil (11a2; 11aB) is controlled by the second power supply.

## Patentansprüche

1. Leistungsquelle (1), die eine erste Leistungsversorgungsspule (11a1) und eine zweite Leistungsversorgungsspule (11a2) aufweist, welche sich gegenseitig beeinflussen, umfassend:
eine erste Leistungsversorgung (12, 171), die konfiguriert ist, um die erste Leistungsversorgungsspule (11a1) anzusteuern;
eine zweite Leistungsversorgung (12, 172), die konfiguriert ist, um die zweite Leistungsversorgungsspule (11a2) anzusteuern; und
eine Leistungsübertragungssteuereinheit (13), die konfiguriert ist, um eine Phasendifferenz und ein Stärkeverhältnis zwischen einem Ausgangssignal der ersten Leistungsversorgungsspule (11a1) und einem Ausgangssignal der zweiten Leistungsversorgungsspule (11a2) basierend auf Impedanzinformationen der ersten Leistungsversorgung und der zweiten Leistungsversorgung zu steuern; **dadurch gekennzeichnet, dass** die Leistungsübertragungssteuereinheit (13) konfiguriert ist, um unabhängig eine Phase und eine Stärke des Ausgangssignals der ersten Leistungsversorgungsspule (11a1) über die erste Leistungsversorgung zu steuern.

2. Leistungsquelle (1) nach Anspruch 1, wobei die Leistungsübertragungssteuereinheit (13) konfiguriert ist, um unabhängig eine einer Phase und einer Stärke des Ausgangssignals der zweiten Leistungsversorgungsspule (11a2) über die zweite Leistungsversorgung zu steuern.

3. Leistungsquelle (1) nach Anspruch 1 oder 2, wobei
die Leistungsübertragungssteuereinheit (13) konfiguriert ist, um die Phasendifferenz und das Stärkeverhältnis zwischen dem Ausgangssignal der ersten Leistungsversorgungsspule (11a1) und dem Ausgangssignal der zweiten Leistungsversorgungsspule (11a2) gemäß Bindungseigenschaften der ersten Leistungsversorgungsspule und der zweiten Leistungsversorgungsspule und einer Leistungsempfängerspule (21a) von mindestens einem Leistungsempfänger (2), welcher Leistung von der Leistungsquelle empfängt, zu steuern.

4. Leistungsquelle (1) nach einem der Ansprüche 1 bis 3, wobei
die Leistungsübertragungssteuereinheit (13) konfiguriert ist, um zu steuern, um das Stärkeverhältnis zwischen dem Ausgangssignal der ersten Leistungsversorgungsspule (11a1) und dem Ausgangssignal der zweiten Leistungsversorgungsspule (11a2) zu fixieren und die Phasendifferenz zu optimieren, wenn die erste Leistungsquelle und die zweite Leistungsquelle Leistungsversorgungen mit konstanter Spannung sind.

5. Leistungsquelle (1) nach einem der Ansprüche 1 bis 3, wobei
die Leistungsübertragungssteuereinheit (13) konfiguriert ist, um zu steuern, um die Phasendifferenz zwischen dem Ausgangssignal der ersten Leistungsversorgungsspule (11a1) und dem Ausgangssignal der zweiten Leistungsversorgungsspule (11a2) zu fixieren und das Stärkeverhältnis zu optimieren, wenn die erste Leistungsquelle und die zweite Leistungsquelle Leistungsversorgungen mit konstanter Spannung sind.

6. Leistungsquelle (1) nach einem der Ansprüche 1 bis 5, wobei
die erste Leistungsversorgungsspule (11a1) und die zweite Leistungsversorgungsspule (11a2) Resonanzspulen sind, die Leistung durch Verwenden einer Magnetfeldresonanz oder elektrischen Feldresonanz übertragen.

7. Drahtloses Leistungsübertragungssystem umfassend eine erste Leistungsquelle (1A), die eine erste Leistungsversorgungsspule (11aA) aufweist, und eine zweite Leistungsquelle (1B), die eine zweite Leistungsversorgungsspule (11aB) aufweist, welche sich gegenseitig beeinflussen, und wobei Leistung drahtlos zu mindestens einem Leistungsempfänger (2) übertragen wird, wobei das drahtlose Leistungsübertragungssystem Folgendes umfasst:
eine erste Leistungsversorgung (12, 171), die konfiguriert ist, um die erste Leistungsversorgungsspule (11aA) anzusteuern;
eine zweite Leistungsversorgung (12, 172), die konfiguriert ist, um die zweite Leistungsversorgungsspule (11aB) anzusteuern; und
eine Leistungsübertragungssteuereinheit (13), die konfiguriert ist, um eine Phasendifferenz und ein Stärkeverhältnis zwischen einem Ausgangssignal der ersten Leistungsversorgungsspule (11aA) und einem Ausgangssignal der zweiten Leistungsversorgungsspule (11aB) basierend auf Impedanzinformationen der ersten Leistungsversorgung und der zweiten Leistungsversorgung zu steuern;
**dadurch gekennzeichnet, dass** die Leistungsübertragungssteuereinheit (13) konfiguriert ist, um unabhängig eine Phase und eine Stärke des Ausgangssignals der ersten Leistungsversorgungsspule (11aA) über die erste Leistungsversorgung zu steuern.

8. Drahtloses Leistungsübertragungssystem nach Anspruch 7, wobei
die Leistungsübertragungssteuereinheit (13) eine Master-Leistungsübertragungssteuereinheit ist, welche eine der ersten Leistungsversorgung oder der zweiten Leistungsversorgung ist.

9. Drahtloses Leistungsübertragungssystem nach Anspruch 7, wobei
die Leistungsübertragungssteuereinheit (13) konfiguriert ist, um unabhängig mindestens eine einer Phase und einer Stärke des Ausgangssignals der zweiten Leistungsversorgungsspule (11aB) über die zweite Leistungsversorgung zu steuern.

10. Drahtloses Leistungsübertragungssystem nach einem der Ansprüche 7 bis 9, wobei
die Leistungsübertragungssteuereinheit (13) konfiguriert ist, um die Phasendifferenz und das Stärkeverhältnis zwischen dem Ausgangssignal der ersten Leistungsversorgungsspule (11aA) und dem Ausgangssignal der zweiten Leistungsversorgungsspule (11aB) gemäß Bindungseigenschaften der ersten Leistungsversorgungsspule und der zweiten Leistungsversorgungsspule und der Leistungsempfängerspule (21a) des Leistungsempfängers (2) zu steuern.

11. Drahtloses Leistungsübertragungssystem nach einem der Ansprüche 7 bis 10, wobei
die Leistungsübertragungssteuereinheit (13) konfiguriert ist, um das Stärkeverhältnis zwischen dem Ausgangssignal der ersten Leistungsversorgungsspule (11aA) und dem Ausgangssignal der zweiten Leistungsversorgungsspule (11aB) zu steuern und die Phasendifferenz zu optimieren, wenn die erste Leistungsquelle und die zweite Leistungsquelle Leistungsversorgungen mit konstanter Spannung sind.

12. Drahtloses Leistungsübertragungssystem nach einem der Ansprüche 7 bis 10, wobei
die Leistungsübertragungssteuereinheit (13) konfiguriert ist, um die Phasendifferenz zwischen dem Ausgangssignal der ersten Leistungsversorgungsspule (11aA) und dem Ausgangssignal der zweiten Leistungsversorgungsspule (11aB) zu fixieren und das Stärkeverhältnis zu optimieren, wenn die erste Leistungsquelle und die zweite Leistungsquelle Leistungsversorgungen mit konstanter Spannung sind.

13. Drahtloses Leistungsübertragungssystem nach einem der Ansprüche 7 bis 12, wobei
die erste Leistungsversorgungsspule (11aA) und die zweite Leistungsversorgungsspule (11aB) Resonanzspulen sind, die Leistung durch Verwenden einer Magnetfeldresonanz oder elektrischen Feldresonanz übertragen.

14. Drahtloses Leistungsübertragungsverfahren, das eine Leistungsquelle oder ein drahtloses Leistungsübertragungssystem, das eine erste Leistungsversorgungsspule (11a1; 11aA) und eine zweite Leistungsversorgungsspule (11a2, 11aB) aufweist, welche sich gegenseitig beeinflussen, zum drahtlosen Übertragen von Leistung zu mindestens einem Leistungsempfänger (2) verwendet, wobei die Leistungsquelle oder das System Folgendes umfasst:
eine erste Leistungsversorgung (12, 171), die konfiguriert ist, um die erste Leistungsversorgungsspule (11a1; 11aA) anzusteuern; und
eine zweite Leistungsversorgung (12, 172), die konfiguriert ist, um die zweite Leistungsversorgungsspule (11a2; 11aB) anzusteuern, wobei das drahtlose Leistungsübertragungsverfahren Folgendes umfasst:
Steuern einer Phasendifferenz und eines Stärkeverhältnisses zwischen einem Ausgangssignal der ersten Leistungsversorgungsspule (11a1; 11aA) und einem Ausgangssignal der zweiten Leistungsversorgungsspule (11a2; 11aB) basierend auf Impedanzinformationen der ersten Leistungsversorgung und der zweiten Leistungsversorgung,
**dadurch gekennzeichnet, dass** eine Phase und eine Stärke des Ausgangssignals der ersten Leistungsversorgungsspule (11a1; 11aA) unabhängig durch die erste Leistungsversorgung gesteuert werden und eine Phase und eine Stärke des Ausgangssignals der zweiten Leistungsversorgungsspule (11a2; 11aB) durch die zweite Leistungsversorgung gesteuert werden.

15. Drahtloses Leistungsübertragungsverfahren nach Anspruch 14, das Folgendes umfasst:
Steuern der Phasendifferenz und des Stärkeverhältnisses zwischen dem Ausgangssignal der ersten Leistungsversorgungsspule (11a1; 11aA) und dem Ausgangssignal der zweiten Leistungsversorgungsspule (11a2; 11aB) gemäß Bindungseigenschaften der ersten Leistungsversorgungsspule und der zweiten Leistungsversorgungsspule und der Leistungsempfängerspule (21a) des Leistungsempfängers (2).

16. Drahtloses Leistungsübertragungsverfahren nach Anspruch 14 oder 15, wobei das drahtlose Leistungsübertragungsverfahren ferner Folgendes umfasst:
Durchführen einer Testleistungsübertragung, um die Ausgangssignale der ersten Leistungsversorgungsspule (11a1; 11aA) und der zweiten Leistungsversorgungsspule (11a2; 11aB) anzupassen, wobei
bei der Testleistungsübertragung
zum Fixieren des Stärkeverhältnisses zwischen dem Ausgangssignal der ersten Leistungsversorgungsspule (11a1; 11aA) und dem Ausgangssignal der zweiten Leistungsversorgungsspule (11a2; 11aB) und zum Optimieren der Phasendifferenz, wenn die erste Leistungsquelle und die zweite Leistungsquelle Leistungsversorgungen mit konstanter Spannung sind, gesteuert wird, und
zum Fixieren der Phasendifferenz zwischen dem Ausgangssignal der ersten Leistungsversorgungsspule (11a1; 11aA) und dem Ausgangssignal der zweiten Leistungsversorgungsspule (11a2; 11aB) und zum Optimieren des Stärkeverhältnisses, wenn die erste Leistungsquelle und die zweite Leistungsquelle Leistungsversorgungen mit konstanter Spannung sind, gesteuert wird.

17. Drahtloses Leistungsübertragungsprogramm zum drahtlosen Übertragen von Leistung zu mindestens einem Leistungsempfänger von einer Leistungsquelle oder einem drahtlosen Leistungsübertragungssystem, das eine erste Leistungsversorgungsspule (11a1; 11aA) und eine zweite Leistungsversorgungsspule (11a2; 11aB) aufweist, welche sich gegenseitig beeinflussen, wobei eine erste Leistungsversorgung die erste Leistungsversorgungsspule ansteuert, und wobei eine zweite Leistungsversorgung die zweite Leistungsversorgungsspule ansteuert, wobei das drahtlose Leistungsübertragungsprogramm bewirkt, dass ein Computer Folgendes ausführt:
Steuern einer Phasendifferenz und eines Stärkeverhältnisses zwischen einem Ausgangssignal der ersten Leistungsversorgungsspule (11a1; 11aA) und einem Ausgangssignal der zweiten Leistungsversorgungsspule (11a2; 11aB) basierend auf Impedanzinformationen der ersten Leistungsversorgung und der zweiten Leistungsversorgung,
**dadurch gekennzeichnet, dass** eine Phase und eine Stärke des Ausgangssignals der ersten Leistungsversorgungsspule (11a1; 11aA) unabhängig durch die erste Leistungsversorgung gesteuert werden und eine Phase und eine Stärke des Ausgangssignals der zweiten Leistungsversorgungsspule (11a2; 11aB) durch die zweite Leistungsversorgung gesteuert werden.

## Revendications

1. Source d'alimentation (1) incluant une première bobine d'alimentation électrique (11a1) et une seconde bobine d'alimentation électrique (11a2) qui s'influencent mutuellement, comprenant :
une première alimentation électrique (12, 171) configurée de manière à exciter la première bobine d'alimentation électrique (11a1) ;
une seconde alimentation électrique (12, 172) configurée de manière à exciter la seconde bobine d'alimentation électrique (11a2) ; et
une unité de commande de transfert de puissance (13) configurée de manière à commander une différence de phase et un rapport d'intensité entre un signal de sortie de la première bobine d'alimentation électrique (11a1) et un signal de sortie de la seconde bobine d'alimentation électrique (11a2), sur la base d'informations d'impédance de la première alimentation électrique et de la seconde alimentation électrique ; **caractérisée en ce que** :
l'unité de commande de transfert de puissance (13) est configurée de manière à commander indépendamment une phase et une intensité du signal de sortie de la première bobine d'alimentation électrique (11a1) par l'intermédiaire de la première alimentation électrique.

2. Source d'alimentation (1) selon la revendication 1, dans laquelle :
l'unité de commande de transfert de puissance (13) est configurée de manière à commander indépendamment une phase et une intensité du signal de sortie de la seconde bobine d'alimentation électrique (11a2), par l'intermédiaire de la seconde alimentation électrique.

3. Source d'alimentation (1) selon la revendication 1 ou 2, dans laquelle :
l'unité de commande de transfert de puissance (13) est configurée de manière à commander la différence de phase et le rapport d'intensité entre le signal de sortie de la première bobine d'alimentation électrique (11a1) et le signal de sortie de la seconde bobine d'alimentation électrique (11a2), conformément à des propriétés de liaison de la première bobine d'alimentation électrique et de la seconde bobine d'alimentation électrique, et d'une bobine de réception de puissance (21a) d'au moins un récepteur de puissance (2) qui reçoit une puissance en provenance de la source d'alimentation électrique.

4. Source d'alimentation (1) selon l'une quelconque des revendications 1 à 3, dans laquelle :
l'unité de commande de transfert de puissance (13) est configurée de manière à commander la correction du rapport d'intensité entre le signal de sortie de la première bobine d'alimentation électrique (11a1) et le signal de sortie de la seconde bobine d'alimentation électrique (11a2), et à optimiser la différence de phase, lorsque la première source d'alimentation et la seconde source d'alimentation sont des alimentations électriques à tension constante.

5. Source d'alimentation (1) selon l'une quelconque des revendications 1 à 3, dans laquelle :
l'unité de commande de transfert de puissance (13) est configurée de manière à commander la correction de la différence de phase entre le signal de sortie de la première bobine d'alimentation électrique (11a1) et le signal de sortie de la seconde bobine d'alimentation électrique (11a2), et à optimiser le rapport d'intensité, lorsque la première source d'alimentation et la seconde source d'alimentation sont des alimentations électriques à courant constant.

6. Source d'alimentation (1) selon l'une quelconque des revendications 1 à 5, dans laquelle :
la première bobine d'alimentation électrique (11a1) et la seconde bobine d'alimentation électrique (11a2) sont des bobines de résonance transférant de la puissance en utilisant une résonance de champ magnétique ou une résonance de champ électrique.

7. Système de transfert de puissance sans fil comprenant une première source d'alimentation (1A) incluant une première bobine d'alimentation électrique (11aA) et une seconde source d'alimentation (1B) incluant une seconde bobine d'alimentation électrique (11aB) lesquelles s'influencent mutuellement, et dans lequel de la puissance est transférée à au moins un récepteur de puissance (2), par voie hertzienne, dans lequel le système de transfert de puissance sans fil comprend :
une première source d'alimentation (12, 171) configurée de manière à exciter la première bobine d'alimentation électrique (11aA) ;
une seconde source d'alimentation (12, 172) configurée de manière à exciter la seconde bobine d'alimentation électrique (11aB) ; et
une unité de commande de transfert de puissance (13) configurée de manière à commander une différence de phase et un rapport d'intensité entre un signal de sortie de la première bobine d'alimentation électrique (11aA) et un signal de sortie de la seconde bobine d'alimentation électrique (11aB), sur la base d'informations d'impédance de la première alimentation électrique et de la seconde alimentation électrique ;
**caractérisé en ce que** l'unité de commande de transfert de puissance (13) est configurée de manière à commander indépendamment une phase et une intensité du signal de sortie de la première bobine d'alimentation électrique (11aA) par l'intermédiaire de la première alimentation électrique.

8. Système de transfert de puissance sans fil selon la revendication 7, dans lequel :
l'unité de commande de transfert de puissance (13) est une unité de commande de transfert de puissance maîtresse correspondant à l'une parmi la première alimentation électrique et la seconde alimentation électrique.

9. Système de transfert de puissance sans fil selon la revendication 7, dans lequel :
l'unité de commande de transfert de puissance (13) est configurée de manière à commander indépendamment au moins l'une parmi une phase et une intensité du signal de sortie de la seconde bobine d'alimentation électrique (11aB) par l'intermédiaire de la seconde alimentation électrique.

10. Système de transfert de puissance sans fil selon l'une quelconque des revendications 7 à 9, dans lequel :
l'unité de commande de transfert de puissance (13) est configurée de manière à commander la différence de phase et le rapport d'intensité entre le signal de sortie de la première bobine d'alimentation électrique (11aA) et le signal de sortie de la seconde bobine d'alimentation électrique (11aB), conformément à des propriétés de liaison de la première bobine d'alimentation électrique et de la seconde bobine d'alimentation électrique, et de la bobine de réception de puissance (21a) du récepteur de puissance (2).

11. Système de transfert de puissance sans fil selon l'une quelconque des revendications 7 à 10, dans lequel :
l'unité de commande de transfert de puissance (13) est configurée de manière à commander la correction du rapport d'intensité entre le signal de sortie de la première bobine d'alimentation électrique (11aA) et le signal de sortie de la seconde bobine d'alimentation électrique (11aB), et à optimiser la différence de phase, lorsque la première source d'alimentation électrique et la seconde source d'alimentation électrique sont des alimentations électriques à tension constante.

12. Système de transfert de puissance sans fil selon l'une quelconque des revendications 7 à 10, dans lequel :
l'unité de commande de transfert de puissance (13) est configurée de manière à commander la correction de la différence de phase entre le signal de sortie de la première bobine d'alimentation électrique (11aA) et le signal de sortie de la seconde bobine d'alimentation électrique (11aB), et à optimiser le rapport d'intensité, lorsque la première source d'alimentation électrique et la seconde source d'alimentation électrique sont des alimentations électriques à courant constant.

13. Système de transfert de puissance sans fil selon l'une quelconque des revendications 7 à 12, dans lequel :
la première bobine d'alimentation électrique (11aA) et la seconde bobine d'alimentation électrique (11aB) sont des bobines de résonance transférant de la puissance en utilisant une résonance de champ magnétique ou une résonance de champ électrique.

14. Procédé de transfert de puissance sans fil faisant appel à une source d'alimentation ou à un système de transfert de puissance sans fil incluant une première bobine d'alimentation électrique (11a1 ; 11aA) et une seconde bobine d'alimentation électrique (11a2 ; 11aB) qui s'influencent mutuellement, pour transférer de la puissance à au moins un récepteur de puissance (2), par voie hertzienne, dans lequel la source d'alimentation ou le système de transfert de puissance sans fil comprend :
une première alimentation électrique (12, 171) configurée de manière à exciter la première bobine d'alimentation électrique (11a1 ; 11aA) ; et
une seconde alimentation électrique (12, 172) configurée de manière à exciter la seconde bobine d'alimentation électrique (11a2 ; 11aB), dans lequel le procédé de transfert de puissance sans fil comprend l'étape ci-dessous consistant à :
commander une différence de phase et un rapport d'intensité entre un signal de sortie de la première bobine d'alimentation électrique (11a1 ; 11aA) et un signal de sortie de la seconde bobine d'alimentation électrique (11a2 ; 11aB), sur la base d'informations d'impédance de la première alimentation électrique et de la seconde alimentation électrique ;
**caractérisé en ce qu'**une phase et une intensité du signal de sortie de la première bobine d'alimentation électrique (11a1 ; 11aA) sont commandées indépendamment par la première alimentation électrique, et **en ce qu'**une phase et une intensité du signal de sortie de la seconde bobine d'alimentation électrique (11a1 ; 11aA) sont commandées indépendamment par la seconde alimentation électrique.

15. Procédé de transfert de puissance sans fil selon la revendication 14, comprenant l'étape ci-dessous consistant à :
commander la différence de phase et le rapport d'intensité entre le signal de sortie de la première bobine d'alimentation électrique (11a1 ; 11aA) et le signal de sortie de la seconde bobine d'alimentation électrique (11a2 ; 11aB), conformément à des propriétés de liaison de la première bobine d'alimentation électrique et de la seconde bobine d'alimentation électrique, et de la bobine de réception de puissance (21a) du récepteur de puissance (2).

16. Procédé de transfert de puissance sans fil selon la revendication 14 ou 15, dans lequel le procédé de transfert de puissance sans fil comprend en outre l'étape ci-dessous consistant à :
mettre en œuvre un transfert de puissance d'essai pour ajuster les signaux de sortie de la première bobine d'alimentation électrique (11a1 ; 11aA) et de la seconde bobine d'alimentation électrique (11a2 ; 11aB), dans lequel,
dans le cadre du transfert de puissance d'essai, le procédé comprend les étapes consistant à :
commander la correction du rapport d'intensité entre le signal de sortie de la première bobine d'alimentation électrique (11a1 ; 11aA) et le signal de sortie de la seconde bobine d'alimentation électrique (11a2 ; 11aB), et l'optimisation de la différence de phase, lorsque la première source d'alimentation électrique et la seconde source d'alimentation électrique sont des alimentations électriques à tension constante ; et
commander la correction de la différence de phase entre le signal de sortie de la première bobine d'alimentation électrique (11a1 ; 11aA) et le signal de sortie de la seconde bobine d'alimentation électrique (11a2 ; 11aB), et l'optimisation du rapport d'intensité, lorsque la première source d'alimentation et la seconde source d'alimentation sont des alimentations électriques à courant constant.

17. Programme de transfert de puissance sans fil pour transférer de la puissance à au moins un récepteur de puissance, par voie hertzienne, à partir d'une source d'alimentation ou d'un système de transfert de puissance sans fil incluant une première bobine d'alimentation électrique (11a1 ; 11aA) et une seconde bobine d'alimentation électrique (11a2 ; 11aB) qui s'influencent mutuellement, une première alimentation électrique excitant la première bobine d'alimentation électrique, et une seconde alimentation électrique excitant la seconde bobine d'alimentation électrique, dans lequel le programme de transfert de puissance sans fil amène un ordinateur à :
commander une différence de phase et un rapport d'intensité entre un signal de sortie de la première bobine d'alimentation électrique (11a1 ; 11aA) et un signal de sortie de la seconde bobine d'alimentation électrique (11a2 ; 11aB), sur la base d'informations d'impédance de la première alimentation électrique et de la seconde alimentation électrique ;
**caractérisé en ce qu'**une phase et une intensité du signal de sortie de la première bobine d'alimentation électrique (11a1 ; 11aA) sont commandées indépendamment par la première alimentation électrique, et **en ce qu'**une phase et une intensité du signal de sortie de la seconde bobine d'alimentation électrique (11a2 ; 11aB) sont commandées indépendamment par la seconde alimentation électrique.
